(19) **Europäisches Patentamt / European Patent Office / Office européen des brevets**

(11) **EP 4 554 320 A1**

(12) **EUROPEAN PATENT APPLICATION**
published in accordance with Art. 153(4) EPC

(43) Date of publication:
**14.05.2025 Bulletin 2025/20**

(21) Application number: **23845188.4**

(22) Date of filing: **28.06.2023**

(51) International Patent Classification (IPC):
**H04W 84/12** (2009.01)     **H04W 72/04** (2023.01)

(52) Cooperative Patent Classification (CPC):
**H04W 28/20; H04W 72/04; H04W 84/12**

(86) International application number:
**PCT/CN2023/103274**

(87) International publication number:
**WO 2024/021975 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.07.2022 CN 202210910681**

(71) Applicant: **Huawei Technologies Co., Ltd.
Shenzhen, Guangdong 518129 (CN)**

(72) Inventors:
• **LIU, Weiqiang
  Shenzhen, Guangdong 518129 (CN)**
• **RUAN, Wei
  Shenzhen, Guangdong 518129 (CN)**

(74) Representative: **Maiwald GmbH
Engineering
Elisenhof
Elisenstrasse 3
80335 München (DE)**

(54) **DATA TRANSMISSION METHOD AND COMMUNICATION DEVICE**

(57)     Embodiments of this application disclose a data transmission method and a communication device, to improve channel bandwidth utilization and data transmission efficiency. The data transmission method provided in embodiments of this application includes: performing clear channel assessment on an existing wireless fidelity Wi-Fi channel to obtain a channel assessment result; determining a target channel based on the channel assessment result, where a bandwidth of the target channel is greater than 80 megahertz MHz, and the bandwidth of the target channel is not a bandwidth of the existing Wi-Fi channel; and sending data to a receiving end through the target channel, or receiving data from a transmitting end through the target channel.

Perform clear channel assessment on an existing wireless fidelity Wi-Fi channel to obtain a channel assessment result — 201

Determine a target channel based on the channel assessment result, where a bandwidth of the target channel is greater than 80 MHz, and the bandwidth of the target channel is not a bandwidth of the existing Wi-Fi channel — 202

Send data to a receiving end through the target channel, or receive data from a transmitting end through the target channel — 203

FIG. 2

**Description**

This application claims priority to Chinese Patent Application No. 202210910681.X, filed with the China National Intellectual Property Administration on July 29, 2022 and entitled "DATA TRANSMISSION METHOD AND COMMUNICATION DEVICE", which is incorporated herein by reference in its entirety.

**TECHNICAL FIELD**

This application relates to the field of communication technologies, and in particular, to a data transmission method and a communication device.

**BACKGROUND**

Wireless fidelity (wireless fidelity, Wi-Fi) may also be referred to as a wireless local area network. Since the release of Wi-Fi in 1997, the 802.11 protocol standard has been developing continuously and is developing towards a higher bandwidth, a faster speed, and higher spectrum efficiency. An available bandwidth and a maximum theoretical data rate both vary according to different standards.

The 802.11 standard provides several different wireless channels for Wi-Fi communication: 2.4 gigahertz (GHz), 3.6 GHz, 4.9 GHz, 5.9 GHz, and 6 GHz. In the 802.11 standard, a transmitter usually occupies at least 20 MHz. The 802.11 standard allows channels to be bound together to form a wider channel to obtain a higher transmission rate.

Currently, the 802.11 standard supports used bandwidths of 20 MHz, 40 MHz, 80 MHz, 160 MHz, and 320 MHz, but cannot use a bandwidth of another size. Consequently, problems of low bandwidth utilization and low data transmission efficiency exist.

**SUMMARY**

Embodiments of this application provide a data transmission method and a communication device, to improve channel bandwidth utilization and data transmission efficiency.

To resolve the foregoing technical problem, embodiments of this application provide the following technical solutions.

According to a first aspect, an embodiment of this application provides a data transmission method, including: performing clear channel assessment on an existing Wi-Fi channel, so that a channel assessment result of the existing Wi-Fi channel can be obtained, and a target channel determined based on the channel assessment result meets the following conditions: A bandwidth of the target channel is greater than 80 MHz, and the bandwidth of the target channel is not a bandwidth of the existing Wi-Fi channel, that is, the bandwidth of the determined target channel is not a bandwidth used by the existing Wi-Fi channel. Therefore, more types of bandwidths that are not used by the existing Wi-Fi channel can be used. After the target channel is determined, data is sent to a receiving end through the target channel, or data is received from a transmitting end through the target channel.

In the foregoing solution, channels of some frequency bands of the Wi-Fi channel are fully utilized, and another bandwidth other than the bandwidth of the current Wi-Fi channel can be used for the bandwidth of the determined target channel. Therefore, the bandwidth of the current Wi-Fi channel can be effectively utilized, bandwidth utilization can be improved, and a data transmission rate can be improved.

In a possible implementation, the bandwidth of the target channel may be obtained by performing puncturing or splicing on the bandwidth of the existing Wi-Fi channel. Performing puncturing on the bandwidth of the existing Wi-Fi channel may reduce a bandwidth value of the bandwidth so that the bandwidth is used as the bandwidth of the target channel, or splicing another bandwidth on the bandwidth of the existing Wi-Fi channel so that the bandwidth is used as the bandwidth of the target channel.

In the foregoing solution, the target channel is an existing idle Wi-Fi channel, and the bandwidth of the target channel is not the bandwidth of the existing Wi-Fi channel. In this case, the bandwidth of the target channel may be obtained by performing puncturing (Punctured) on the bandwidth of the existing Wi-Fi channel. For example, the bandwidth of the target channel is 100 MHz, and the bandwidth of the Wi-Fi channel is 160 MHz. In this case, puncturing may be performed on the 160 MHz bandwidth to obtain 100 MHz of the target channel.

In a possible implementation, the data transmission method performed by a communication device further includes the following step: To notify the receiving end of the bandwidth of the target channel, signaling may be generated, and the signaling is sent to the receiving end. In this way, the receiving end determines the bandwidth of the target channel by parsing the signaling. In addition, to enable the receiving end to determine the bandwidth of the target channel, the receiving end may be further notified of a bandwidth position at which puncturing or splicing is performed on the bandwidth of the Wi-Fi channel, signaling may be generated, and the signaling is sent to the receiving end. In this way, the receiving end determines, by parsing the signaling, the bandwidth position at which puncturing or splicing is performed on the bandwidth of the existing Wi-Fi channel, thereby determining the bandwidth of the target channel.

In the foregoing solution, the bandwidth of the target channel notified through the signaling may be a real bandwidth value of the target channel. For example, if the bandwidth of the target channel is 100 MHz, 100 MHz is notified through the signaling. Alternatively, a bandwidth range of the target channel is notified through the signaling. In this case, a real bandwidth of the target channel needs to be determined with reference to the bandwidth position that is notified through the signaling and that is used to perform puncturing on the bandwidth of the existing Wi-Fi channel. For example, the target channel notified through the signaling is of 160 MHz, and that puncturing needs to be performed on a 160 MHz bandwidth is notified through the signaling. In this case, the real bandwidth of the target channel is a bandwidth obtained after removing a punctured bandwidth from the 160 MHz bandwidth.

In a possible implementation, the bandwidth of the target channel is 100 MHz, and the target channel includes a plurality of channels. For example, the target channel may include a primary channel and three secondary channels, where the three secondary channels are respectively a first secondary channel, a second secondary channel, and a third secondary channel. In this embodiment of this application, the following settings may be performed for bandwidths of the foregoing channels. The bandwidth of the primary channel is 20 MHz, the bandwidth of the first secondary channel is 20 MHz, the bandwidth of the second secondary channel is 40 MHz, and the bandwidth of the third secondary channel is 20 MHz.

In the foregoing solution, in this embodiment of this application, a 20 MHz bandwidth and a 40 MHz bandwidth of the existing Wi-Fi channel are fully utilized, to determine the 100 MHz bandwidth of the target channel. In addition, another bandwidth other than the bandwidth of the current Wi-Fi channel can be used. Therefore, the bandwidth of the current Wi-Fi channel can be effectively utilized, bandwidth utilization can be improved, and a data transmission rate can be improved.

In a possible implementation, a design solution of a multiple resource block unit MRU is 996 + 242, the target channel may include a primary channel and three secondary channels, and the three secondary channels are respectively a first secondary channel, a second secondary channel, and a third secondary channel. In this case, the following resource block unit allocation solution may be used: The primary channel, the first secondary channel, and the second secondary channel are used to carry 996 resource block units RUs, the third secondary channel is used to carry 242 resource block units, and a subcarrier index of the target channel reuses a subcarrier index of a 100-MHz bandwidth in the 160 MHz bandwidth.

In the foregoing solution, based on the 802.11be protocol, an added multiple resource block unit (multiple resource unit, MRU) type (tone) is 996 + 242. The primary channel, the first secondary channel, and the second secondary channel are used to carry 996 RUs, the third secondary channel carries 242 RUs, and subcarrier indexes of the data and a pilot (Pilot) reuse subcarrier indexes of the 100 MHz bandwidth in the 160 MHz bandwidth. The bandwidth of the target channel can be implemented as 100 MHz by using an MRU of the foregoing type 996 + 242.

In a possible implementation, signaling is sent to the receiving end. There are a plurality of specific implementations of the signaling. For example, the signaling includes preamble information, the preamble information indicates that the bandwidth of the target channel is 100 MHz, and/or the preamble information indicates three 20 MHz bandwidths punctured in the 160 MHz bandwidth.

In the foregoing solution, the 160 MHz bandwidth is the bandwidth of the existing Wi-Fi channel, and the three 20 MHz bandwidths are punctured in the 160 MHz bandwidth, so that the 100 MHz bandwidth of the target channel can be obtained. In this case, the preamble information may directly indicate that the bandwidth of the target channel is 100 MHz. In this embodiment of this application, the bandwidth of the target channel may be indicated to the receiving end through the preamble information, so that the receiving end can transmit data through the target channel. In this embodiment of this application, the bandwidth of the target channel is 100 MHz, and another bandwidth other than the bandwidth of the current Wi-Fi channel can be used. Therefore, the bandwidth of the current Wi-Fi channel can be effectively utilized, bandwidth utilization can be improved, and a data transmission rate can be improved.

In a possible implementation, a frame structure of the preamble information is described as follows: The preamble information includes a universal signal field, and a specific structure of the universal signal field is as follows. The universal signal field includes a bandwidth field and/or a punctured channel information field, where the bandwidth field indicates that the bandwidth of the target channel is 100 MHz; and/or the punctured channel information field indicates three 20 MHz bandwidths punctured in the 160 MHz bandwidth.

In the foregoing solution, the frame structure of the preamble information may include the universal signal field, and the universal signal field may include the bandwidth field and/or the punctured channel information field. A manner of setting a value of the bandwidth field and a manner of setting a value of the punctured information field are not limited in this embodiment of this application. In this embodiment of this application, the bandwidth of the target channel may be indicated to the receiving end through the preamble information of the foregoing frame structure, so that the receiving end can transmit data through the target channel. In this embodiment of this application, the bandwidth of the target channel is 100 MHz, and another bandwidth other than the bandwidth of the current Wi-Fi channel can be used. Therefore, the bandwidth of the current Wi-Fi channel can be effectively utilized, bandwidth utilization can be improved, and a data transmission rate can be improved.

In a possible implementation, a frame structure of the punctured channel information field is described as follows: The punctured channel information field includes puncturing pattern information. The puncturing pattern information is eight bits, and values of the eight bits are sequentially 11111000, 00011111, 11110100, 11110010, 11110001, 01001111, 00101111, or 10001111, where 1 represents a 20 MHz bandwidth that is not punctured, and 0 represents a 20 MHz bandwidth that is punctured.

In the foregoing solution, the puncturing pattern information occupies eight bits. Values of four consecutive bits in the eight bits are 1, corresponding to an 80 MHz bandwidth. A value of another bit other than the four consecutive bits whose values are 1 in the eight bits is 1, indicating a 20 MHz bandwidth. The 100 MHz bandwidth of the target channel can be obtained by using the 80 MHz bandwidth and the 20 MHz bandwidth.

In a possible implementation, the method performed by the communication device further includes: performing segmentation parsing on the data to obtain a first frequency subblock and a second frequency subblock, where a frequency range of the first frequency subblock is lower than a frequency range of the second frequency subblock;

determining that a number of resource units included in the first frequency subblock is 996 and that a number of resource units included in the second frequency subblock is 242; and determining, when dual carrier modulation DCM is not used for the first frequency subblock, that a number $N_{CBPSS}$ of coded bits per symbol of the first frequency subblock is equal to $980 \times N_{BPSCS}$ and that a number of coded bits per symbol of the second frequency subblock is equal to $234 \times N_{BPSCS}$; or determining, when dual carrier modulation DCM is used for the first frequency subblock and the second frequency subblock, that a number of coded bits per symbol of the first frequency subblock is equal to 490 and that a number of coded bits per symbol of the second frequency subblock is equal to 117; or

determining that a number of resource units included in the first frequency subblock is 242 and that a number of resource units included in the second frequency subblock is 996; and determining, when dual carrier modulation DCM iis used for neither the first frequency subblock nor the second frequency subblock, that a number of coded bits per symbol of the first frequency subblock is equal to $234 \times N_{BPSCS}$ and that a number of coded bits per symbol of the second frequency subblock is equal to $980 \times N_{BPSCS}$; or determining, when dual-carrier modulation is used for the first frequency subblock and the second frequency subblock, that a number of coded bits per symbol of the first frequency subblock is equal to 117 and that a number of coded bits per symbol of the second frequency subblock is equal to 490, where

$N_{BPSCS}$ represents a number of coded bits per subcarrier.

In the foregoing solution, segmentation parsing is performed on to-be-transmitted data to obtain two frequency segments, namely, the first frequency subblock and the second frequency subblock, where the first frequency subblock is a lower frequency subblock, and the second frequency subblock is a higher frequency subblock. Based on the foregoing description, it can be learned that, based on the 802.11be protocol, the added MRU type is 996 + 242. In this case, the quantities of resource elements respectively included in the first frequency subblock and the second frequency subblock have the following two implementations: In one case, the number of resource elements included in the first frequency subblock is 996, and the number of resource elements included in the second frequency subblock is 242. In the other case, the number of resource elements included in the first frequency subblock is 242, and the number of resource elements included in the second frequency subblock is 996. A number of coded bits per symbol of each frequency subblock can be obtained through the foregoing segmentation parsing.

In a possible implementation, the method performed by the communication device further includes:

performing segmentation parsing on the data to obtain a first frequency subblock and a second frequency subblock, where a frequency range of the first frequency subblock is lower than a frequency range of the second frequency subblock; and

determining that a number of resource units included in the first frequency subblock is 996 and that a number of resource units included in the second frequency subblock is 242; determining that an assignment proportion parameter $m_0$ of the first frequency subblock is equal to 4s and that an assignment proportion parameter $m_1$ of the second frequency subblock is equal to s; and determining, when dual-carrier modulation iis used for neither the first frequency subblock nor the second frequency subblock, that leftover bits of the first frequency subblock are equal to $44 \times N_{BPSCS}$; or determining, when dual-carrier modulation is used for the first frequency subblock and the second frequency subblock, that leftover bits of the first frequency subblock are equal to 22; or

determining that a number of resource units included in the first frequency subblock is 242 and a number of resource units included in the second frequency subblock is 996; determining that an assignment proportion parameter $m_0$ of the first frequency subblock is equal to s and that an assignment proportion parameter $m_1$ of the second frequency subblock is equal to 4s; and determining, when dual-carrier modulation iis used for neither the first frequency subblock nor the second frequency subblock, that leftover bits of the second frequency subblock are equal to $44 \times N_{BPSCS}$; or

determining, when dual-carrier modulation is used for the first frequency subblock and the second frequency subblock, that leftover bits of the second frequency subblock are equal to 22, where

$$s = \max\left(1, \frac{N_{BPSCS}}{2}\right),$$

and $N_{BPSCS}$ represents a number of coded bits per subcarrier.

In the foregoing solution, for different values of the first frequency subblock and the second frequency subblock, values of the assignment proportion parameter of the both frequency subblocks are also different. The assignment proportion parameter of each frequency subblock and the leftover bits of the frequency subblock can be obtained through the foregoing segmentation parsing.

In a possible implementation, the method performed by the communication device further includes: performing a frequency shift on a time domain signal of the data on each antenna based on 40 MHz, where 40 MHz is a frequency difference between a baseband center frequency of the 160 MHz bandwidth and a baseband center frequency of an 80 MHz bandwidth in which the primary channel is located.

In the foregoing solution, the bandwidth of the target channel is 100 MHz, the bandwidth of the target channel is obtained by performing puncturing on the 160 MHz bandwidth, and the 80 MHz bandwidth in which the primary channel is located may be an upper 80 MHz bandwidth in the 160 MHz bandwidth, or may be a lower 80 MHz bandwidth in the 160 MHz bandwidth. In this case, the frequency difference between the baseband center frequency of the 160 MHz bandwidth and the baseband center frequency of the 80 MHz bandwidth in which the primary channel is located is 40 MHz, and the frequency shift may be performed on the time domain signal on the antenna based on 40 MHz. Interference between signals can be reduced by using the frequency shift.

In a possible implementation, the determining a target channel based on the channel assessment result includes: determining, when the primary channel is idle, the first secondary channel is idle, the second secondary channel is idle, and the third secondary channel is idle, that the bandwidth of the target channel is a sum of the bandwidth of the primary channel, the bandwidth of the first secondary channel, the bandwidth of the second secondary channel, and the bandwidth of the third secondary channel.

In the foregoing solution, in this embodiment of this application, the bandwidth of the target channel is 100 MHz, and another bandwidth other than the bandwidth of the current Wi-Fi channel can be used. Therefore, the bandwidth of the current Wi-Fi channel can be effectively used, bandwidth utilization can be improved, and a data transmission rate can be improved.

In a possible implementation, the method performed by the communication device further includes: determining, when the third secondary channel is busy, the target channel depending on whether the primary channel is idle, whether the first secondary channel is idle, and whether the second secondary channel is idle.

In the foregoing solution, clear channel assessment is performed on each of the foregoing channels, to determine an idle state of each of the primary channel, the first secondary channel, the second secondary channel, and the third secondary channel. When the third secondary channel is busy, the bandwidth of the third secondary channel cannot be used for the bandwidth of the target channel. In this case, the target channel needs to be further determined depending on whether the primary channel is idle, whether the first secondary channel is idle, and whether the second secondary channel is busy. For example, if the primary channel is idle, the first secondary channel is idle, and the second secondary channel is busy, the bandwidth of the target channel may be determined by using the bandwidth of the primary channel and the bandwidth of the first secondary channel. For another example, if the primary channel is idle, the first secondary channel is busy, and the second secondary channel is busy, the bandwidth of the target channel may be determined by using the bandwidth of the primary channel.

In a possible implementation, the bandwidth of the target channel is 200 MHz, and the target channel includes a plurality of channels. For example, the target channel may include a primary channel and five secondary channels, and the five secondary channels are respectively a first secondary channel, a second secondary channel, a third secondary channel, a fourth secondary channel, and a fifth secondary channel. In this embodiment of this application, the following settings may be performed for bandwidths of the foregoing channels. The bandwidth of the primary channel is 20 MHz, the bandwidth of the first secondary channel is 20 MHz, the bandwidth of the second secondary channel is 40 MHz, the bandwidth of the third secondary channel is 80 MHz, the bandwidth of the fourth secondary channel is 20 MHz, and the bandwidth of the fifth secondary channel is 20 MHz.

In the foregoing solution, a sum of the bandwidths of the primary channel, the first secondary channel, the second secondary channel, the third secondary channel, the fourth secondary channel, and the fifth secondary channel is equal to the 200 MHz bandwidth of the target channel. In this embodiment of this application, the 20 MHz bandwidth, the 40 MHz bandwidth, and the 80 MHz bandwidth of the Wi-Fi channel are fully utilized, to determine the 200 MHz bandwidth of the target channel. In addition, another bandwidth other than the bandwidth of the current Wi-Fi channel can be used. Therefore, the bandwidth of the current Wi-Fi channel can be effectively utilized, bandwidth utilization can be improved, and a data transmission rate can be improved.

In a possible implementation, the primary channel, the first secondary channel, and the second secondary channel are used to carry 996 resource block units, the third secondary channel is used to carry 996 resource block units, the fourth secondary channel is used to carry 242 resource block units, the fifth secondary channel is used to carry 242 resource block units, and a subcarrier index of the target channel reuses a subcarrier index of a 200 MHz bandwidth in a 320 MHz bandwidth.

In the foregoing solution, based on the 802.11be protocol, an added multiple resource block unit (multiple resource unit, MRU) type (tone) is $242 + 2 \times 996 + 242$. The primary channel, the first secondary channel, and the second secondary channel are used to carry 996 RUs, the third secondary channel carries 996 RUs, the fourth secondary channel is used to carry 242 RUs, and the fifth secondary channel is used to carry 242 RUs, and subcarrier indexes of the data and a pilot (Pilot) reuse subcarrier indexes of the 200 MHz bandwidth in the 320 MHz bandwidth. The bandwidth of the target channel can be implemented as 200 MHz by using an MRU of the foregoing type $242 + 2 \times 996 + 242$.

In a possible implementation, the signaling includes preamble information, and the preamble information indicates that the bandwidth of the target channel is 200 MHz. In the foregoing solution, the bandwidth of the target channel may be indicated to the receiving end through the preamble information, so that the receiving end can transmit data through the target channel. In this embodiment of this application, the bandwidth of the target channel is 200 MHz, and another bandwidth other than the bandwidth of the current Wi-Fi channel can be used. Therefore, the bandwidth of the current Wi-Fi channel can be effectively utilized, bandwidth utilization can be improved, and a data transmission rate can be improved.

In a possible implementation, the preamble information includes a universal signal field, and the universal signal field includes a bandwidth field, where the bandwidth field indicates that the bandwidth of the target channel is 200 MHz. In the foregoing solution, a frame structure of the preamble information may include the universal signal field, and the universal signal field may include the bandwidth field. A manner of setting a value of the bandwidth field is not limited in this embodiment of this application. In this embodiment of this application, the bandwidth of the target channel may be indicated to the receiving end through the preamble information of the foregoing frame structure, so that the receiving end can transmit data through the target channel. In this embodiment of this application, the bandwidth of the target channel is 200 MHz, and another bandwidth other than the bandwidth of the current Wi-Fi channel can be used. Therefore, the bandwidth of the current Wi-Fi channel can be effectively utilized, bandwidth utilization can be improved, and a data transmission rate can be improved.

In a possible implementation, the method further includes:

performing segmentation parsing on the data to obtain the following four frequency subblocks whose frequency ranges are in ascending order in sequence: a first frequency subblock, a second frequency subblock, a third frequency subblock, and a fourth frequency subblock; and
determining that a number of resource units included in the first frequency subblock is 242, that a number of resource units included in the second frequency subblock is 996, that a number of resource units included in the third frequency subblock is 996, and that a number of resource units included in the fourth frequency subblock is 242; and determining, when dual-carrier modulation is used for none of the first frequency subblock, the second frequency subblock, the third frequency subblock, and the fourth frequency subblock, that a number $N_{CBPSS}$ of coded bits per symbol of the first frequency subblock is equal to $234 \times N_{BPSCS}$, that a number of coded bits per symbol of the second frequency subblock is equal to $980 \times N_{BPSCS}$, that a number of coded bits per symbol of the third frequency subblock is equal to $980 \times N_{BPSCS}$, and that a number of coded bits per symbol of the fourth frequency subblock is equal to $234 \times N_{BPSCS}$, where
$N_{BPSCS}$ represents a number of coded bits per subcarrier.

In the foregoing solution, segmentation parsing is performed on to-be-transmitted data to obtain four frequency segments, that is, the following four frequency subblocks whose frequency ranges are in ascending order in sequence: the first frequency subblock, the second frequency subblock, the third frequency subblock, and the fourth frequency subblock. Based on the foregoing description, it can be learned that, based on the 802.11be protocol, an added MRU type is $242 + 2 \times 996 + 242$. In this case, the quantities of resource elements respectively included in the four frequency subblocks is as follows: The number of resource elements included in the first frequency subblock is 242, the number of resource elements included in the second frequency subblock is 996, the number of resource elements included in the third frequency subblock is 996, and the number of resource elements included in the fourth frequency subblock is 242. A number of coded bits per symbol of each frequency subblock can be obtained through the foregoing segmentation parsing.

In a possible implementation, the method performed by the communication device further includes: performing segmentation parsing on the data to obtain the following four frequency subblocks whose frequency ranges are in ascending order in sequence: a first frequency subblock, a second frequency subblock, a third frequency subblock, and a fourth frequency subblock;

determining that a number of resource units included in the first frequency subblock is 242, that a number of resource units included in the second frequency subblock is 996, that a number of resource units included in the third frequency subblock is 996, and that a number of resource units included in the fourth frequency subblock is 242; and determining, when dual-carrier modulation is used for none of the first frequency subblock, the second frequency subblock, the third frequency subblock, and the fourth frequency subblock, that an assignment proportion parameter $m_0$ of the first frequency subblock is equal to s, that an assignment proportion parameter $m_1$ of the second frequency subblock is equal to 4s, that an assignment proportion parameter $m_2$ of the third frequency subblock is equal to 4s, and that an assignment proportion parameter $m_3$ of the fourth frequency subblock is equal to s; and determining that respective leftover bits of the second frequency subblock and the third frequency subblock are equal to $44 \times N_{BPSCS}$, where

$$s = \max\left(1, \frac{N_{BPSCS}}{2}\right),$$

and $N_{BPSCS}$ represents a number of coded bits per subcarrier.

In the foregoing solution, for different values of the first frequency subblock, the second frequency subblock, the third frequency subblock, and the fourth frequency subblock, values of the assignment proportion parameters of all the frequency subblocks are also different. The assignment proportion parameter of each frequency subblock and the leftover bits of the frequency subblock can be obtained through the foregoing segmentation parsing.

In a possible implementation, the determining a target channel based on the channel assessment result includes: determining, when the primary channel is idle, the first secondary channel is idle, the second secondary channel is idle, the third secondary channel is idle, the fourth secondary channel is idle, and the fifth secondary channel is idle, that the bandwidth of the target channel is a sum of the bandwidth of the primary channel, the bandwidth of the first secondary channel, the bandwidth of the second secondary channel, the bandwidth of the third secondary channel, the bandwidth of the fourth secondary channel, and the bandwidth of the fifth secondary channel.

In the foregoing solution, when the primary channel, the first secondary channel, the second secondary channel, the third secondary channel, the fourth secondary channel, and the fifth secondary channel are all idle, the bandwidth of the target channel may be obtained by using the sum of the bandwidth of the primary channel, the bandwidth of the first secondary channel, the bandwidth of the second secondary channel, the bandwidth of the third secondary channel, the bandwidth of the fourth secondary channel, and the bandwidth of the fifth secondary channel. In this embodiment of this application, the bandwidth of the target channel is 200 MHz, and another bandwidth other than the bandwidth of the current Wi-Fi channel can be used. Therefore, the bandwidth of the current Wi-Fi channel can be effectively utilized, bandwidth utilization can be improved, and a data transmission rate can be improved.

According to a second aspect, an embodiment of this application further provides a communication device, including:

a channel assessment module, configured to perform clear channel assessment on an existing wireless fidelity Wi-Fi channel to obtain a channel assessment result;
a channel determining module, configured to determine a target channel based on the channel assessment result, where a bandwidth of the target channel is greater than 80 megahertz MHz, and the bandwidth of the target channel is not a bandwidth of the existing Wi-Fi channel; and
a transceiver module, configured to send data to a receiving end through the target channel, or receive data from a transmitting end through the target channel.

In the second aspect of this application, the modules constituting the communication device may further perform the steps described in the first aspect and the possible implementations. For details, refer to the description in the first aspect and the possible implementations.

According to a third aspect, an embodiment of this application provides a computer-readable storage medium. The computer-readable storage medium stores instructions. When the instructions are run on a computer, the computer is enabled to perform the method according to the first aspect.

According to a fourth aspect, an embodiment of this application provides a computer program product including instructions. When the computer program product runs on a computer, the computer is enabled to perform the method according to the first aspect.

According to a fifth aspect, an embodiment of this application provides a communication apparatus. The communication apparatus may include an entity such as a terminal device or a chip. The communication apparatus includes a processor and a memory. The memory is configured to store instructions. The processor is configured to execute the instructions in the memory, to enable the communication apparatus to perform the method according to any one of the first aspect.

According to a sixth aspect, this application provides a chip system. The chip system includes a processor, and is configured to support a communication device in implementing a function in the foregoing aspects, for example, sending or processing data and/or information in the foregoing methods. In a possible design, the chip system further includes a memory. The memory is configured to store program instructions and data that are necessary for the communication device. The chip system may include a chip, or may include a chip and another discrete component.

According to the foregoing technical solutions, it can be learned that embodiments of this application have the following advantages:

In embodiments of this application, clear channel assessment is performed on the existing Wi-Fi channel to obtain the channel assessment result of the existing Wi-Fi channel, and then the target channel is determined based on the channel assessment result. The bandwidth of the target channel is greater than 80 MHz, and the bandwidth of the target channel is not the bandwidth of the existing Wi-Fi channel. In other words, the bandwidth of the target channel may be another bandwidth value other than the bandwidth of the Wi-Fi channel, so that data can be received and sent based on the bandwidth of the target channel. In embodiments of this application, channels of some frequency bands of the Wi-Fi channel are fully utilized, and another bandwidth other than the bandwidth of the current Wi-Fi channel can be used for the bandwidth of the determined target channel. Therefore, the bandwidth of the current Wi-Fi channel can be effectively utilized, bandwidth utilization can be improved, and a data transmission rate can be improved.

## BRIEF DESCRIPTION OF DRAWINGS

FIG. 1 is a diagram of a composition architecture of a communication system according to an embodiment of this application;

FIG. 2 is a schematic block flowchart of a data transmission method according to an embodiment of this application;

FIG. 3 is a diagram of a resource block unit used in a 100 MHz bandwidth according to an embodiment of this application;

FIG. 4 is a diagram of a primary channel and a secondary channel of a 100 MHz channel according to an embodiment of this application;

FIG. 5 is a diagram of a frame structure of signaling according to an embodiment of this application;

FIG. 6A and FIG. 6B are a block diagram of a structure of a transmitter according to an embodiment of this application;

FIG. 7a is a diagram of performing a frequency shift on a center frequency of a channel according to an embodiment of this application;

FIG. 7b is a diagram of performing a frequency shift on a center frequency of another channel according to an embodiment of this application;

FIG. 8 is a diagram of a resource block unit used in a 200 MHz bandwidth according to an embodiment of this application;

FIG. 9 is a diagram of a primary channel and a secondary channel of a 200 MHz channel according to an embodiment of this application;

FIG. 10 is a diagram of a 100 MHz bandwidth in which an 80 MHz bandwidth PPDU and a 20 MHz bandwidth PPDU coexist according to an embodiment of this application;

FIG. 11 is a diagram of an LPF mode 1 of a 100 MHz PPDU in a 5.735-5.835 GHz frequency band according to an embodiment of this application;

FIG. 12 is a diagram of an LPF mode 2 of a 100 MHz PPDU in a 5.735-5.835 GHz frequency band according to an embodiment of this application;

FIG. 13 is a diagram of a 200 MHz bandwidth in which 160 MHz bandwidth PPDUs coexist according to an embodiment of this application;

FIG. 14 is a diagram of an LPF mode of a 200-M PPDU on a 5.15-5.35 GHz frequency band according to an embodiment of this application;

FIG. 15 is a diagram of a composition structure of a communication device according to an embodiment of this application; and

FIG. 16 is a diagram of a composition structure of a communication device according to an embodiment of this application.

## DESCRIPTION OF EMBODIMENTS

Embodiments of this application provide a data transmission method and a communication device, to improve channel bandwidth utilization and data transmission efficiency.

The following describes embodiments of this application with reference to the accompanying drawings.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain", and any other variants mean to cover the non-exclusive inclusion, so that a process, method, system, product, or device that includes a series of units is not necessarily limited to those units, but may include other units not expressly listed or inherent to such a process, method, system, product, or device.

The technical solutions in embodiments of this application may be applied to various communication systems for data processing, for example, a code division multiple access (code division multiple access, CDMA) system, a time division multiple access (time division multiple access, TDMA) system, a frequency division multiple access (frequency division multiple access, FDMA) system, an orthogonal frequency division multiple access (orthogonal frequency division multiple access, OFDMA) system, a single carrier frequency division multiple access (single carrier FDMA, SC-FDMA) system, and another system. The terms "system" and "network" may be interchanged with each other. The CDMA system may implement wireless technologies such as universal terrestrial radio access (universal terrestrial radio access, UTRA) and CDMA2000. The UTRA may include a wideband CDMA (wideband CDMA, WCDMA) technology and another variant technology of CDMA. The CDMA2000 may cover the interim standard (interim standard, IS) 2000 (IS-2000), the IS-95, and the IS-856 standard. A wireless technology such as a global system for mobile communications (global system for mobile communications, GSM) may be implemented in the TDMA system. Wireless technologies such as evolved universal terrestrial radio access (evolved UTRA, E-UTRA), ultra mobile broadband (ultra mobile broadband, UMB), IEEE 802.11 (Wi-Fi), IEEE 802.16 (WiMAX), IEEE 802.20, and Flash OFDMA may be implemented in the OFDMA system. The UTRA and the E-UTRA correspond to UMTS and an evolved version of the UMTS. Long term evolution (long term evolution, LTE) and various versions evolved based on LTE in 3GPP are a new version of UMTS that uses E-UTRA. A 5th generation (5 Generation, briefly referred to as "5G") communication system or new radio (New Radio, briefly referred to as "NR") is a next generation communication system under study. In addition, the communication system is further applicable to future-oriented communication technologies, and is applicable to all the technical solutions provided in embodiments of this application. The system architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

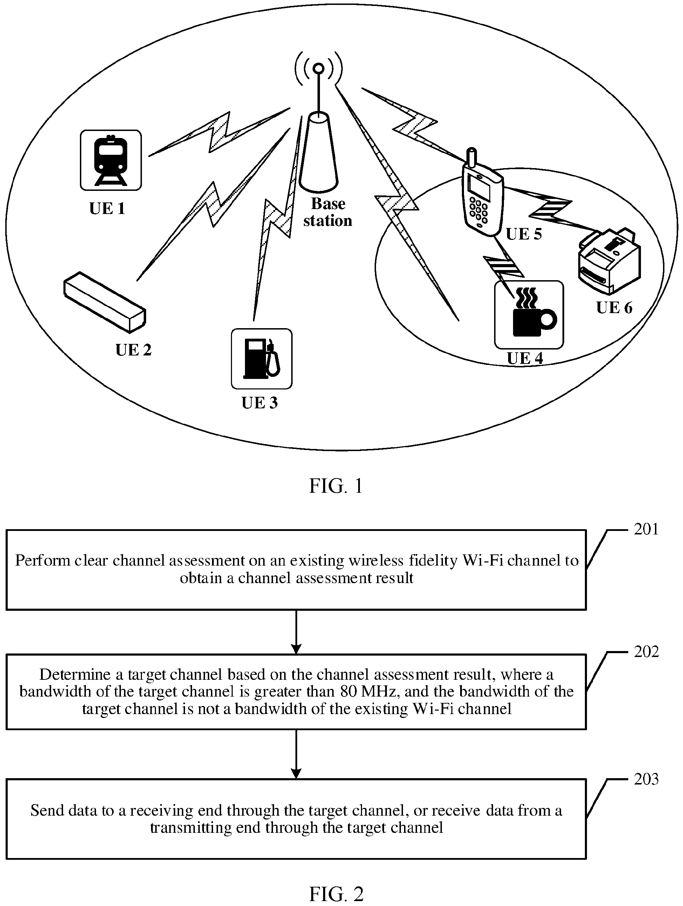

FIG. 1 is a diagram of a structure of a possible communication network according to an embodiment of this application. A system includes one or more network devices. The network device may be any device having a wireless transceiver function, or a chip disposed in the device having the wireless transceiver function. The network device includes but is not limited to a base station (for example, a base station (BS), a NodeB (NodeB), an evolved NodeB (eNodeB or eNB), a gNodeB (gNodeB) or gNB in a fifth generation 5G communication system, a base station in a future communication system, an access node in a Wi-Fi system, a wireless relay node, or a wireless backhaul node) and the like. The base station may be a macro base station, a micro base station, a picocell base station, a small cell, a relay station, or the like. A plurality of base stations may support a network using the foregoing one or more technologies, or a future evolved network. A core network may support a network using the foregoing one or more technologies or a future evolved network. The base station may include one or more co-site or non-co-site transmission reception points (transmission receiving points, TRPs). The network device may alternatively be a radio controller, a central unit (central unit, CU), a distributed unit (distributed unit, DU), or the like in a cloud radio access network (cloud radio access network, CRAN) scenario. The network device may alternatively be a server, a wearable device, a vehicle-mounted device, or the like. That the network device is a base station is used as an example for description below. The plurality of network devices may be base stations of a same type, or may be base stations of different types. The base station may communicate with a terminal device 1 to a terminal device 6, or may communicate with the terminal device 1 to the terminal device 6 through a relay station. The terminal device 1 to the terminal device 6 may support communication with a plurality of base stations that use different technologies. For example, the terminal devices may support communication with a base station supporting an LTE network, may support communication with a base station supporting the 5G network, or may support dual connections to the base station in the LTE network and the base station in the 5G network. For example, the base station is a RAN node that connects a terminal to a wireless network. Currently, some examples of the RAN node are a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), or a wireless fidelity (wireless fidelity, Wi-Fi) access point (access point, AP). In a network structure, the network device may include a central unit (central unit, CU) node, a distributed unit (distributed unit, DU) node, or a RAN device including a CU node and a DU node.

The terminal device 1 to the terminal device 6 are also referred to as user equipment (user equipment, UE), a mobile station (mobile station, MS), a mobile terminal (mobile terminal, MT), a terminal (station, STA), and the like, and are devices that provide voice and/or data connectivity for a user, or a chip disposed in the device, for example, a handheld device or an in-vehicle device that has a wireless connection function. Currently, some examples of the terminal device are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote surgery (remote medical surgery), a wireless terminal in a smart grid (smart grid), a wireless terminal in transportation safety (transportation safety), a wireless terminal in a smart city (smart city), or a wireless terminal in a smart home (smart home). The terminal device provided in embodiments of this application may be a low-complexity terminal device and/or a terminal device in a coverage enhancement A mode.

In this embodiment of this application, the network device and UE 1 to UE 6 constitute a communication system. In the communication system, the network device performs data transmission with the UE through a Wi-Fi channel. The current common 802.11 protocol supports the use of bandwidths of 20 MHz, 40 MHz, 80 MHz, 160 MHz, and 320 MHz. The foregoing bandwidth may be referred to as a bandwidth of an existing Wi-Fi channel. The existing Wi-Fi channel is a Wi-Fi channel specified in an existing protocol standard. For example, the existing Wi-Fi channel is a Wi-Fi channel whose bandwidth is 20 MHz, 40 MHz, 80 MHz, 160 MHz, or 320 MHz. Some countries or regions have idle spectrum of 100 M and 200 M. The current 802.11 protocol cannot fully utilize a 100-M bandwidth or a 200-M bandwidth.

China is used as an example. In a 5G frequency band, there is a complete 200 MHz bandwidth in 5150-5350 MHz. Even if all channels in 200 M are idle in an air interface environment, a terminal STA of a Wi-Fi system cannot use the 200 MHz bandwidth for transmission. According to a current protocol, the use of a maximum of 160-M bandwidth can be supported. Consequently, an idle spectrum 5150-5170 MHz and idle spectra of a 5330-5350 MHz frequency band cannot be fully utilized. Similarly, there is a 100 MHz bandwidth in a 5735-5835 frequency band, and actually a maximum of 80-M bandwidth can be used. Even if the remaining 20 M is idle, the remaining 20 M cannot be utilized. Consequently, a problem of low bandwidth utilization exists.

To resolve a problem of low bandwidth utilization in a conventional technology, an embodiment of this application provides a data transmission method, to transmit data through an existing Wi-Fi channel. A bandwidth of the existing Wi-Fi channel is not a bandwidth of the existing Wi-Fi channel. In this embodiment of this application, another bandwidth other than the bandwidth of the current Wi-Fi channel can be used. Therefore, the bandwidth of the current Wi-Fi channel can be effectively utilized, bandwidth utilization can be improved, and a data transmission rate can be improved.

FIG. 2 is a diagram of a data transmission method according to an embodiment of this application. The data transmission method may be performed by a communication device. The communication device may be specifically the foregoing network device, or may be the foregoing UE. This is not limited herein. The data transmission method provided in this embodiment of this application mainly includes the following steps.

201: Perform clear channel assessment (clear channel assessment, CCA) on an existing Wi-Fi channel to obtain a channel assessment result.

The Wi-Fi channel is a Wi-Fi channel defined in the 802.11 protocol standard, and the existing Wi-Fi channel is a channel not supported in the current 802.11 protocol standard. For example, if the current common 802.11 protocol supports the use of bandwidths of 20 MHz, 40 MHz, 80 MHz, 160 MHz, and 320 MHz, channels whose bandwidths are 20 MHz, 40 MHz, 80 MHz, 160 MHz, and 320 MHz are existing Wi-Fi channels, and bandwidths of the existing Wi-Fi channels are 20 MHz, 40 MHz, 80 MHz, 160 MHz, and 320 MHz. MHz may be abbreviated as M.

In this embodiment of this application, clear channel assessment is performed on the existing Wi-Fi channel, and the channel assessment result is generated. For example, the channel assessment result may indicate an idle state of the existing Wi-Fi channel, or the channel assessment result may indicate a busy state of the existing Wi-Fi channel, where the idle state indicates whether the channel is idle, and the busy state indicates whether the channel is busy.

It should be noted that the existing Wi-Fi channel may be specifically one or more channels, and clear channel assessment may be separately performed on the one or more channels. A specific assessment manner of an idle channel is not limited in this embodiment of this application.

202: Determine a target channel based on the channel assessment result, where a bandwidth of the target channel is greater than 80 MHz, and the bandwidth of the target channel is not a bandwidth of the existing Wi-Fi channel.

After the channel assessment result is obtained, the target channel may be determined based on an idle state of the channel indicated by the channel assessment result. The target channel is a currently available channel, and the target channel is an existing Wi-Fi channel in the idle state. In this embodiment of this application, the bandwidth of the determined target channel is greater than 80 MHz, and the bandwidth of the target channel is not the bandwidth of the existing Wi-Fi channel. Based on the foregoing example, the bandwidth of the existing Wi-Fi channel may be 20 MHz, 40 MHz, 80 MHz, 160 MHz, or 320 MHz. In this case, the bandwidth of the target channel may be another bandwidth other than the bandwidth of the existing Wi-Fi channel. For example, the bandwidth of the target channel may be 100 MHz, 180 MHz, or 200 MHz. A value of the bandwidth of the target channel is not limited herein, and the value should be determined with reference to a specific application scenario.

In subsequent embodiments, a transmission method using a 100-M bandwidth or a 200 MHz bandwidth of a target channel according to an embodiment of this application is described in detail by using an example.

In some embodiments of this application, the bandwidth of the target channel is obtained by performing puncturing or splicing on the bandwidth of the existing Wi-Fi channel.

The target channel is an existing idle Wi-Fi channel, and the bandwidth of the target channel is not the bandwidth of the existing Wi-Fi channel. In this case, the bandwidth of the target channel may be obtained by performing puncturing (Punctured) on the bandwidth of the Wi-Fi channel. For example, the bandwidth of the target channel is 100 MHz, and the bandwidth of the Wi-Fi channel is 160 MHz. In this case, the 100 MHz of the target channel may be obtained by performing puncturing on the 160 MHz bandwidth.

The bandwidth of the target channel is not the bandwidth of the existing Wi-Fi channel. In this case, the bandwidth of the target channel may be obtained by performing splicing on the bandwidth of the Wi-Fi channel. For example, the bandwidth of the target channel is 200 MHz, and the bandwidth of the Wi-Fi channel is 160 MHz. In this case, the 160 MHz bandwidth and two 20 MHz bandwidths may be spliced to obtain 200 MHz of the target channel.

In this embodiment of this application, puncturing or splicing is performed on the bandwidth of the existing Wi-Fi channel, so that the bandwidth of the Wi-Fi channel is used for the target channel, thereby improving bandwidth utilization.

In some embodiments of this application, in addition to performing step 201 and step 202 by the communication device, the data transmission method performed by the communication device may further include the following step: Step A1: Send signaling to a receiving end, where the signaling is used to notify the bandwidth of the target channel, and/or is used to notify a bandwidth position at which puncturing or splicing is performed on the bandwidth of the Wi-Fi channel.

After the target channel is determined, signaling may be sent to the receiving end, to notify the bandwidth of the target channel, and/or to notify the bandwidth position at which puncturing or splicing is performed on the bandwidth of the Wi-Fi channel. Specifically, the signaling may be higher layer signaling or physical layer signaling. For example, the higher layer signaling may include radio resource control (radio resource control, RRC) signaling or medium access control (medium access control layer, MAC) signaling, and the physical layer signaling may include downlink control information (downlink control information, DCI) signaling.

The bandwidth of the target channel notified through the signaling may be a real bandwidth value of the target channel. For example, if the bandwidth of the target channel is 100 MHz, 100 MHz is notified through the signaling. Alternatively, a bandwidth range of the target channel is notified through the signaling. In this case, a real bandwidth of the target channel needs to be determined with reference to the bandwidth position that is notified through the signaling and that is used to perform puncturing on the bandwidth of the Wi-Fi channel. For example, the target channel notified through the signaling is of 160 MHz, and that puncturing needs to be performed on a 160 MHz bandwidth is notified through the signaling. In this case, the real bandwidth of the target channel is a bandwidth obtained after removing a punctured bandwidth from the 160 MHz bandwidth.

Next, a specific implementation in which the bandwidth of the target channel is 100 MHz is described by using an example.

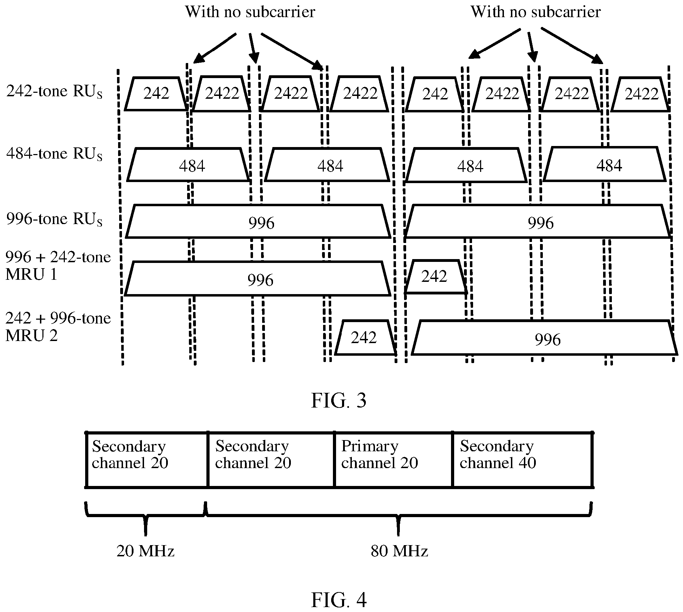

In some embodiments of this application, FIG. 4 is a diagram of a primary channel and a secondary channel of a 100 MHz channel according to an embodiment of this application. A target channel includes a primary (primary) channel, a first secondary (secondary) channel, a second secondary channel, and a third secondary channel.

A bandwidth of the primary channel is 20 MHz.

A bandwidth of the first secondary channel is 20 MHz, a bandwidth of the second secondary channel is 40 MHz, and a bandwidth of the third secondary channel is 20 MHz.

In a 100 MHz bandwidth implementation scenario, the target channel includes the primary channel, the first secondary channel, the second secondary channel, and the third secondary channel, where the primary channel, the first secondary channel, and the second secondary channel are consecutive subcarriers. The bandwidth of the primary channel is 20 MHz, the bandwidth of the first secondary channel is 20 MHz, the bandwidth of the second secondary channel is 40 MHz, and the bandwidth of the third secondary channel is 20 MHz. The 20 MHz and 40 MHz are bandwidths of a Wi-Fi channel, and a sum of the bandwidths of the primary channel, the first secondary channel, the second secondary channel, and the third secondary channel is equal to a 100 MHz bandwidth of the target channel. In this embodiment of this application, the 20 MHz bandwidth and the 40 MHz bandwidth of the Wi-Fi channel are fully utilized, to determine the 100 MHz bandwidth of the target channel. In addition, another bandwidth other than the bandwidth of the current Wi-Fi channel can be used. Therefore, the bandwidth of the current Wi-Fi channel can be effectively utilized, bandwidth utilization can be improved, and a data transmission rate can be improved.

In some embodiments of this application, the primary channel, the first secondary channel, and the second secondary channel are used to carry 996 resource block units (resource units, RUs), the third secondary channel is used to carry 242 resource block units, and a subcarrier index of the target channel reuses a subcarrier index of a 100 MHz bandwidth in a 160 MHz bandwidth.

Based on the 802.11be protocol, an added multiple resource block unit (multiple resource unit, MRU) type (tone) is 996 + 242. The primary channel, the first secondary channel, and the second secondary channel are used to carry 996 RUs, the third secondary channel carries 242 RUs, and subcarrier indexes of data and a pilot (Pilot) reuse subcarrier indexes of the 100 MHz bandwidth in the 160 MHz bandwidth. The bandwidth of the target channel can be implemented as 100 MHz by using an MRU of the foregoing type 996 + 242.

FIG. 3 is a diagram of a resource block unit used in a 100 MHz bandwidth according to an embodiment of this application. Based on the 802.11be protocol, two MRU types, namely, 996 + 242-tone and 242 + 996-tone, are added.

996 RUs correspond to an 80 MHz bandwidth, 242 RUs correspond to a 20 MHz bandwidth, and 996 + 242 MRUs occupy a 100 MHz bandwidth in total. Subcarrier indexes of data (Data) and a pilot (Pilot) reuse subcarrier indexes of a 100 MHz bandwidth in a 160 MHz bandwidth. For a specific configuration manner, refer to Table 36-6 in 80.11be. Details are not described herein again.

In some embodiments of this application, the signaling includes preamble information, and the signaling is specifically used to notify a bandwidth of a target channel, and/or is used to notify a bandwidth position at which puncturing or splicing is performed on a bandwidth of an existing Wi-Fi channel. The preamble information indicates that the bandwidth of the target channel is 100 MHz, and/or indicate three punctured 20 MHz bandwidths in the 160 MHz bandwidth.

The 160 MHz bandwidth is the bandwidth of the existing Wi-Fi channel, and the three 20 MHz bandwidths are punctured in the 160 MHz bandwidth, so that the 100 MHz bandwidth of the target channel can be obtained. In this case, the preamble information may directly indicate that the bandwidth of the target channel is 100 MHz. In this embodiment of this application, the bandwidth of the target channel may be indicated to the receiving end through the preamble information, so that the receiving end can transmit data through the target channel. In this embodiment of this application, the bandwidth of the target channel is 100 MHz, and another bandwidth other than the bandwidth of the current Wi-Fi channel can be used. Therefore, the bandwidth of the current Wi-Fi channel can be effectively utilized, bandwidth utilization can be improved, and a data transmission rate can be improved.

The following is not limited: In some embodiments of this application, the preamble information may alternatively indicate that the bandwidth of the target channel is 160 MHz, and then an actual bandwidth of the target channel may be determined as 100 MHz with reference to the three punctured 20 MHz bandwidths indicated by the preamble information.

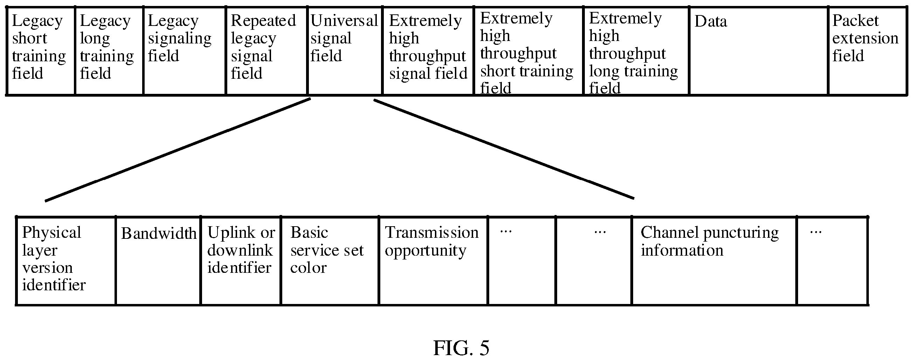

Further, in some embodiments of this application, FIG. 5 is a diagram of a frame structure of signaling according to an embodiment of this application. Preamble information includes a universal signal field (universal signal field, U-SIG). The universal signal field includes a bandwidth (bandwidth, BW) field and/or a punctured channel information (punctured channel information) field. The bandwidth field indicates that a bandwidth of a target channel is 100 MHz, and/or the punctured channel information field indicates three 20 MHz bandwidths punctured in a 160 MHz bandwidth.

The frame structure of the preamble information may include the universal signal field, and the universal signal field may include the bandwidth field and/or the punctured channel information field. A manner of setting a value of the bandwidth field and a manner of setting a value of the punctured information field are not limited in this embodiment of this application. In this embodiment of this application, the bandwidth of the target channel may be indicated to the receiving end through the preamble information of the foregoing frame structure, so that the receiving end can transmit data through the target channel. In this embodiment of this application, the bandwidth of the target channel is 100 MHz, and another bandwidth other than the bandwidth of the current Wi-Fi channel can be used. Therefore, the bandwidth of the current Wi-Fi channel can be effectively utilized, bandwidth utilization can be improved, and a data transmission rate can be improved.

As shown in FIG. 5, next, a design of a 100-M bandwidth of a U-SIG field is described. In this embodiment of this application, 100 MHz transmission is implemented by puncturing three 20 M in a 160-M bandwidth. For example, three 20 M are continuously punctured in the 160-M bandwidth. To support the 100-M bandwidth transmission, fields included in the U-SIG field are shown in Table 1 below:

**Table 1 Abbreviations of PPDU**

| Filed | English full name | Chinese full name |
|---|---|---|
| L-STF | Non-HT short training field | Legacy short training field |
| L-LTF | Non-HT long training field | Legacy long training field |
| L-SIG | Non-HT signal field | Legacy signal field |
| RL-SIG | Repeated non-HT signal field | Repeated legacy signal field |
| U-SIG | Universal signal field | Universal signal field |

(continued)

| Filed | English full name | Chinese full name |
|---|---|---|
| EHT-SIG | EHT signal field | Extremely high throughput signal field |
| EHT-STF | EHT short training field | Extremely high throughput short training field |
| EHT-LTF | EHT long training field | Extremely high throughput long training field |
| Data | Data field carrying a PSDU(s) | Data |
| PE | Packet extension field | Packet extension field |
| PHY Ver. | PHY version identifier | Physical layer version identifier |
| BW | Bandwidth | Bandwidth |
| UL/DL | Uplink/Downlink | Uplink or downlink identifier |
| BSS color | Basic service set color | Basic service set color |
| TXOP | Transmission opportunity | Transmission opportunity |
| Punctured channel information | Punctured channel information | Channel puncturing information |

The BW field indicates the bandwidth of the target channel in the U-SIG, and occupies three bits in total. Corresponding values of B3 to B5 are shown in Table 2 below. In this embodiment of this application, the values of B3 to B5 may be set to 3, corresponding to 160 MHz.

**Table 2 Definition of the BW in the U-SIG**

| B3 to B5 | PPDU bandwidth (Bandwidth) (MHz) |
|---|---|
| 0 | 20 |
| 1 | 40 |
| 2 | 80 |
| 3 | 160 |
| 4 | 320 MHz-1 |
| 5 | 320 MHz-2 |

In Table 2 above, a 320 MHz channel includes any two adjacent 160 MHz channels in a 6 GHz frequency band. Two types, namely, 320 MHz-1 and 320 MHz-2, of the 320 MHz channel are defined. 320 MHz-1 is defined as the 320 MHz channel, and center frequencies of the channel are 31, 95, and 159. 320 MHz-2 is defined as the 320 MHz channel, and center frequencies of the channel are 63, 127, and 191.

Further, in some embodiments of this application, the punctured channel information field includes puncturing pattern (puncturing pattern) information,

The puncturing pattern information is eight bits, and values of the eight bits are sequentially 11111000, 00011111, 11110100, 11110010, 11110001, 01001111, 00101111, or 10001111.

1 represents a 20 MHz bandwidth that is not punctured, and 0 represents a 20 MHz bandwidth that is punctured.

The puncturing pattern information occupies eight bits. Values of four consecutive bits in the eight bits are 1, corresponding to an 80 MHz bandwidth. A value of another bit other than the four consecutive bits whose values are 1 in the eight bits is 1, indicating a 20 MHz bandwidth. The 100 MHz bandwidth of the target channel can be obtained by using the 80 MHz bandwidth and the 20 MHz bandwidth.

As shown in Table 3, the punctured channel information indicates, in a current protocol, 20 M that is punctured. The extension field value (Field value) may be used to indicate that a 60-M bandwidth in a 160-M bandwidth is punctured.

Table 3 Puncturing pattern of the punctured channel information

| PPDU bandwidth | Case (Case) | Punching pattern (Puncturing pattern) | Field value (Field value) |
|---|---|---|---|
| 160 | 60 MHz puncturing | 11111xxx | 13 |
| 160 | 60 MHz puncturing | xxx11111 | 14 |

1 represents a 20 MHz bandwidth that is not punctured, and x represents a 20 MHz bandwidth that is punctured.

It may be understood that the puncturing patterns in Table 3 above are merely some examples that may be implemented. The following is not limited: The puncturing pattern may alternatively include at least one of the following: 1111x1xx, 1111xx1x, 1111xxx1, x1xx1111, xx1x1111, and 1xxx1111.

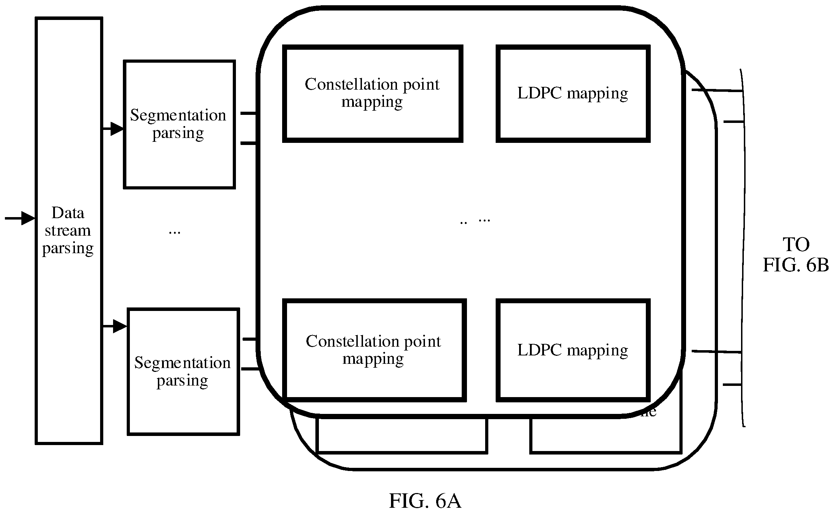

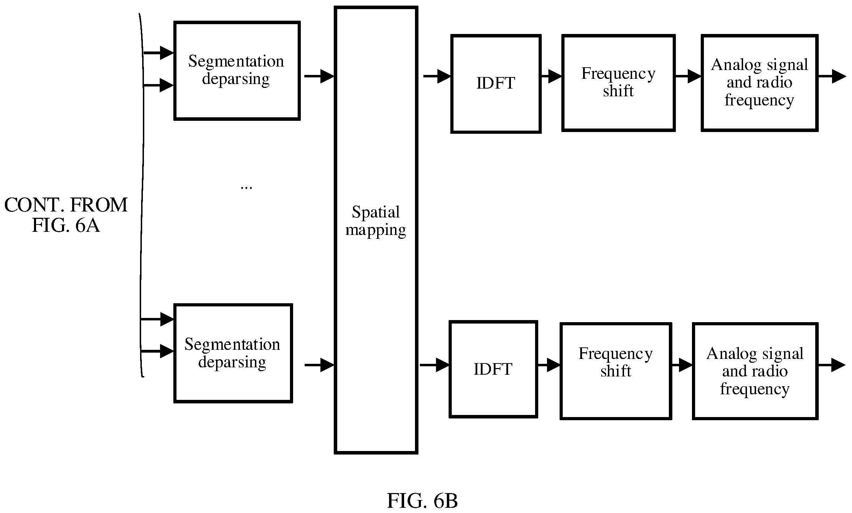

FIG. 6A and FIG. 6B are a block diagram of a structure of a transmitter according to an embodiment of this application. A data sending procedure mainly includes: performing data stream parsing (Stream Parse), dividing a data stream into two frequency subblocks, performing segmentation parsing (Segment Parser), constellation point mapping (Constellation mapper), low-density parity-check (Low density parity -check, LDPC) mapping (tone mapper), and segmentation deparsing (Segment DeParser) on each frequency subblock, then performing spatial mapping (Spatial Mapping) on data of the two frequency subblocks, then performing inverse discrete Fourier transforming (inverse discrete Fourier transform, IDFT) and a frequency shift (Frequency Shift) on the data, and sending the data through an analog signal and radio frequency (Analog and RF) module.

In the foregoing 100-M PPDU transmission path, a baseband waveform is generated in a 160-M preamble puncturing (preamble puncture) manner, then BW160M IDFT is multiplexed, and a frequency shifter (Frequency Shift) is added in a time domain path, to move a baseband signal to a 100-M PPDU position. A dual-side bandwidth of the foregoing analog-side low-pass filter (low-pass filter, LPF) is set to 120 MHz. If the bandwidth of the low-pass filter is less than 120 MHz, an in-band effective signal is filtered. If the bandwidth of the low-pass filter is greater than 120 MHz, the anti-interference performance of an adjacent channel is affected. It should be noted that a value, such as 118 MHz, around 120 MHz is also feasible, but a deviation cannot be excessively large.

The following describes a segmentation parsing procedure in the foregoing procedure.

In some embodiments of this application, in addition to performing step 201 and step 202 by the communication device, the data transmission method performed by the communication device may further include the following steps:

Step B1: Perform segmentation parsing (segment parser) on the data to obtain a first frequency subblock (frequency subblock) and a second frequency subblock, where a frequency range of the first frequency subblock is lower than a frequency range of the second frequency subblock.

Step B2: Determine that a number of resource units included in the first frequency subblock is 996 and that a number of resource units included in the second frequency subblock is 242; and determine, when dual carrier modulation DCM is not used for the first frequency subblock, that a number (number of coded bits per symbol, $N_{CBPSS}$) of coded bits per symbol of the first frequency subblock is equal to $980 \times N_{BPSCS}$ and that a number of coded bits per symbol of the second frequency subblock is equal to $234 \times N_{BPSCS}$; or determine, when dual carrier modulation DCM is used for the first frequency subblock and the second frequency subblock, that a number of coded bits per symbol of the first frequency subblock is equal to 490 and that a number of coded bits per symbol of the second frequency subblock is equal to 117.

Step B3: Determine that a number of resource units included in the first frequency subblock is 242 and that a number of resource units included in the second frequency subblock is 996; and determine, when dual carrier modulation DCM iis used for neither the first frequency subblock nor the second frequency subblock, that a number of coded bits per symbol of the first frequency subblock is equal to $234 \times N_{BPSCS}$ and that a number of coded bits per symbol of the second frequency subblock is equal to $980 \times N_{BPSCS}$; or determine, when dual-carrier modulation is used for the first frequency subblock and the second frequency subblock, that a number of coded bits per symbol of the first frequency subblock is equal to 117 and that a number of coded bits per symbol of the second frequency subblock is equal to 490.

$N_{BPSCS}$ represents a number (number of coded bits per single carrier) of coded bits per subcarrier.

Segmentation parsing is performed on to-be-transmitted data to obtain two frequency segments, namely, the first frequency subblock and the second frequency subblock, where the first frequency subblock is a lower frequency subblock, and the second frequency subblock is a higher frequency subblock. Based on the foregoing description, it can be learned that, based on the 802.11be protocol, the added MRU type is 996 + 242. In this case, the quantities of resource elements respectively included in the first frequency subblock and the second frequency subblock have the following two implementations: In one case, the number of resource elements included in the first frequency subblock is 996, and the number of resource elements included in the second frequency subblock is 242. In the other case, the number of resource elements included in the first frequency subblock is 242, and the number of resource elements included in the second frequency subblock is 996. The following separately describes the foregoing two cases by using examples.

Because the bandwidth is greater than 80 MHz, segmentation parsing needs to be considered, which is consistent with processing in an existing protocol. Two frequency subblocks are obtained through division based on segmentation parsing of 996 + 242. Specific processing is shown in Table 4.

Table 4 Value of $N_{CBPSS,u}$ of a user u under an MRU of 996 + 242

| MRU | RU order (order) (from low Frequency to high Frequency (low to high frequency)) | Length (L) | Is dual-carrier modulation used (Is DCM used?) | $N_{CBPSS,0,u}$ | $N_{CBPSS,1,u}$ |
|---|---|---|---|---|---|
| 996 + 242 | 996 + 242 | 2 | No (No) | 980 x $N_{BPSCS,u}$ | 234 x $N_{BPSCS,u}$ |
| | | | Yes (Yes) | 490 | 117 |
| | 242 + 996 | | No | 234 x $N_{BPSCS,u}$ | 980 x $N_{BPSCS,u}$ |
| | | | Yes | 117 | 490 |

$N_{CBPSS,0,u}$ represents $N_{CBPSS}$ of the user u on a frequency subblock 0, and $N_{CBPSS,1,u}$ represents $N_{CBPSS}$ of the user u on a frequency subblock 1. $N_{BPSCS,u}$ represents $N_{BPSCS}$ of the user u.

In some embodiments of this application, in addition to performing step 201 and step 202 by the communication device, the data transmission method performed by the communication device may further include the following steps:

Step C1: Perform segmentation parsing on the data to obtain a first frequency subblock and a second frequency subblock, where a frequency range of the first frequency subblock is lower than a frequency range of the second frequency subblock.

Step C2: Determine that a number of resource units included in the first frequency subblock is 996 and that a number of resource units included in the second frequency subblock is 242; determine that an assignment proportion parameter $m_0$ of the first frequency subblock is equal to 4s and that an assignment proportion parameter $m_1$ of the second frequency subblock is equal to s; and determine, when dual-carrier modulation iis used for neither the first frequency subblock nor the second frequency subblock, that leftover bits of the first frequency subblock are equal to 44 × $N_{BPSCS}$; or determine, when dual-carrier modulation is used for the first frequency subblock and the second frequency subblock, that leftover bits of the first frequency subblock are equal to 22.

Step C3: Determine that a number of resource units included in the first frequency subblock is 242 and a number of resource units included in the second frequency subblock is 996; determine that an assignment proportion parameter $m_0$ of the first frequency subblock is equal to s and that an assignment proportion parameter $m_1$ of the second frequency subblock is equal to 4s; and determine, when dual-carrier modulation iis used for neither the first frequency subblock nor the second frequency subblock, that leftover bits of the second frequency subblock are equal to 44 × $N_{BPSCS}$; or determine, when dual-carrier modulation is used for the first frequency subblock and the second frequency subblock, that leftover bits of the second frequency subblock are equal to 22.

$$s = \max\left(1, \frac{N_{BPSCS}}{2}\right),$$

and $N_{BPSCS}$ represents a number of coded bits per subcarrier.

For different values of the first frequency subblock and the second frequency subblock, values of the assignment proportion parameters of the both frequency subblocks are also different. This is specifically shown in Table 5 below.

Table 5 Segmentation parsing parameter (Segment parser parameter) of an MRU of 996 + 242

| MRU | RU order (low to high frequency) | L | Is DCM used? | Assignment proportion Parameter $m_0$ | Assignment proportion Parameter $m_1$ | Leftover bits per frequency subblock (Leftover bits per frequency subblock) |
|---|---|---|---|---|---|---|
| 996 + 242 | 996 + 242 | 2 | No | 4s | s | 44 x $N_{BPSCS,u}$ |
| | | | Yes | | | 22 |
| | 242 + 996 | | No | s | 4s | 44 x $N_{BPSCS,u}$ |
| | | | Yes | | | 22 |

$$s = \max\left(1, \frac{N_{BPSCS,u}}{2}\right).$$

In some embodiments of this application, in addition to performing step 201 and step 202 by the communication device, the data transmission method performed by the communication device may further include the following step: Step D1: Perform a frequency shift (frequency shift) on a time domain signal of data on each antenna based on 40 MHz.

40 MHz is a frequency difference between a baseband center frequency of the 160 MHz bandwidth and a baseband center frequency of an 80 MHz bandwidth in which the primary channel is located.

Specifically, the bandwidth of the target channel is 100 MHz, the bandwidth of the target channel is obtained by performing puncturing on the 160 MHz bandwidth, and the 80 MHz bandwidth in which the primary channel is located may be an upper 80 MHz bandwidth in the 160 MHz bandwidth, or may be a lower 80 MHz bandwidth in the 160 MHz bandwidth. In this case, the frequency difference between the baseband center frequency of the 160 MHz bandwidth and the baseband center frequency of the 80 MHz bandwidth in which the primary channel is located is 40 MHz, and the frequency shift may be performed on the time domain signal on the antenna based on 40 MHz. Interference between signals can be reduced by using the frequency shift.

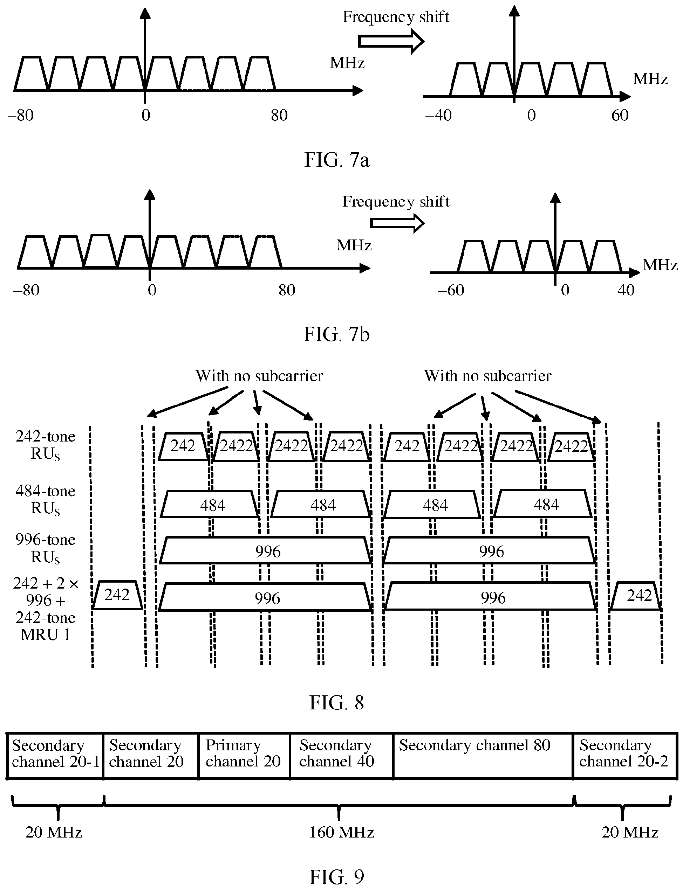

FIG. 7a and FIG. 7b show two manners of performing a frequency shift on a center frequency of a channel. The center frequency is shifted by 40 MHz, and an obtained bandwidth range is (-40, 60), or an obtained bandwidth range is (-60, 40).

In some embodiments of this application, the determining a target channel based on the channel assessment result in step 202 includes the following step: Step E1: Determine, when the primary channel is idle, the first secondary channel is idle, the second secondary channel is idle, and the third secondary channel is idle, that the bandwidth of the target channel is a sum of the bandwidth of the primary channel, the bandwidth of the first secondary channel, the bandwidth of the second secondary channel, and the bandwidth of the third secondary channel.

The target channel may include: the primary channel, the first secondary channel, the second secondary channel, and the third secondary channel. Clear channel assessment is performed on each of the foregoing channels, to determine an idle state of each of the primary channel, the first secondary channel, the second secondary channel, and the third secondary channel. When the primary channel, the first secondary channel, the second secondary channel, and the third secondary channel are all idle, the bandwidth of the target channel may be obtained by using the sum of the bandwidth of the primary channel, the bandwidth of the first secondary channel, the bandwidth of the second secondary channel, and the bandwidth of the third secondary channel. In this embodiment of this application, the bandwidth of the target channel is 100 MHz, and another bandwidth other than the bandwidth of the current Wi-Fi channel can be used. Therefore, the bandwidth of the current Wi-Fi channel can be effectively utilized, bandwidth utilization can be improved, and a data transmission rate can be improved.

In some embodiments of this application, in addition to performing step 201 and step 202 by the communication device, the data transmission method performed by the communication device may further include the following step: F1: Determine, when the third secondary channel is busy, the target channel depending on whether the primary channel is idle, whether the first secondary channel is idle, and whether the second secondary channel is idle.

The target channel may include: the primary channel, the first secondary channel, the second secondary channel, and the third secondary channel. Clear channel assessment is performed on each of the foregoing channels, to determine an idle state of each of the primary channel, the first secondary channel, the second secondary channel, and the third secondary channel. When the third secondary channel is busy, the bandwidth of the third secondary channel cannot be used for the bandwidth of the target channel. In this case, the target channel needs to be further determined depending on whether the primary channel is idle, whether the first secondary channel is idle, and whether the second secondary channel is busy. For example, if the primary channel is idle, the first secondary channel is idle, and the second secondary channel is busy, the bandwidth of the target channel may be determined by using the bandwidth of the primary channel and the bandwidth of the first secondary channel. For another example, if the primary channel is idle, the first secondary channel is busy, and the second secondary channel is busy, the bandwidth of the target channel may be determined by using the bandwidth of the primary channel.

Next, a specific implementation in which the bandwidth of the target channel is 200 MHz is described by using an example.

In some embodiments of this application, FIG. 9 is a diagram of a primary channel and a secondary channel of a 200 MHz channel according to an embodiment of this application. A target channel includes: a primary channel, a first secondary channel, a second secondary channel, a third secondary channel, a fourth secondary channel, and a fifth secondary channel.

A bandwidth of the primary channel is 20 MHz.

A bandwidth of the first secondary channel is 20 MHz, a bandwidth of the second secondary channel is 40 MHz, a bandwidth of the third secondary channel is 80 MHz, a bandwidth of the fourth secondary channel is 20 MHz, and a bandwidth of the fifth secondary channel is 20 MHz.

In a 200 MHz bandwidth implementation scenario, the target channel includes the primary channel, the first secondary channel, the second secondary channel, the third secondary channel, the fourth secondary channel, and the fifth secondary channel, where the primary channel, the first secondary channel, and the second secondary channel are consecutive subcarriers. The bandwidth of the primary channel is 20 MHz, the bandwidth of the first secondary channel is 20 MHz, the bandwidth of the second secondary channel is 40 MHz, the bandwidth of the third secondary channel is 80 MHz, the bandwidth of the fourth secondary channel is 20 MHz, and the bandwidth of the fifth secondary channel is 20 MHz. 20 MHz, 40 MHz, and 80 MHz described above are bandwidths of the existing Wi-Fi channel, and a sum of the bandwidths of the primary channel, the first secondary channel, the second secondary channel, the third secondary channel, the fourth secondary channel, and the fifth secondary channel is equal to a 200 MHz bandwidth of the target channel. In this embodiment of this application, the 20 MHz bandwidth, the 40 MHz bandwidth, and the 80 MHz bandwidth of the Wi-Fi channel are fully utilized, to determine the 200 MHz bandwidth of the target channel. In addition, another bandwidth other than the bandwidth of the current Wi-Fi channel can be used. Therefore, the bandwidth of the current Wi-Fi channel can be effectively utilized, bandwidth utilization can be improved, and a data transmission rate can be improved.

In some embodiments of this application, the primary channel, the first secondary channel, and the second secondary channel are used to carry 996 resource block units.

The third secondary channel is used to carry 996 resource block units.

The fourth secondary channel is used to carry 242 resource block units.

The fifth secondary channel is used to carry 242 resource block units.

A subcarrier index of a 200 MHz bandwidth in a 320 MHz bandwidth is reused as a subcarrier index of the target channel.

Based on the 802.11be protocol, an added multiple resource block unit (multiple resource unit, MRU) type (tone) is $242 + 2 \times 996 + 242$. The primary channel, the first secondary channel, and the second secondary channel are used to carry 996 RUs, the third secondary channel carries 996 RUs, the fourth secondary channel is used to carry 242 RUs, and the fifth secondary channel is used to carry 242 RUs, and subcarrier indexes of the data and a pilot (Pilot) reuse subcarrier indexes of the 200 MHz bandwidth in the 320 MHz bandwidth. The bandwidth of the target channel can be implemented as 200 MHz by using an MRU of the foregoing type $242 + 2 \times 996 + 242$.

FIG. 8 is a diagram of a resource block unit used in a 200 MHz bandwidth according to an embodiment of this application. Based on the 802.11be protocol, an added MRU type is $242 + 2 \times 996 + 242$-tone. 996 RUs correspond to an 80-M bandwidth, 242 RUs correspond to a 20-M bandwidth, and $242 + 2 \times 996 + 242$ MRUs occupy a 200 MHz bandwidth in total. The subcarrier indexes of the data and a pilot reuse subcarrier indexes of the 200 MHz bandwidth in the 320 MHz bandwidth. For details, refer to Table 36-7 in 80.11be. Details are not described herein again.

In some embodiments of this application, the signaling includes preamble information.

The preamble information indicates that the bandwidth of the target channel is 200 MHz.

In this embodiment of this application, the bandwidth of the target channel may be indicated to the receiving end through the preamble information, so that the receiving end can transmit data through the target channel. In this embodiment of this application, the bandwidth of the target channel is 200 MHz, and another bandwidth other than the bandwidth of the current Wi-Fi channel can be used. Therefore, the bandwidth of the current Wi-Fi channel can be effectively utilized, bandwidth utilization can be improved, and a data transmission rate can be improved.

Further, in some embodiments of this application, the preamble information includes a universal signal field.

The universal signal field includes a bandwidth field.

The bandwidth field indicates that the bandwidth of the target channel is 200 MHz.

A frame structure of the preamble information may include the universal signal field, and the universal signal field may include the bandwidth field. A manner of setting a value of the bandwidth field is not limited in this embodiment of this application. In this embodiment of this application, the bandwidth of the target channel may be indicated to the receiving end through the preamble information of the foregoing frame structure, so that the receiving end can transmit data through the target channel. In this embodiment of this application, the bandwidth of the target channel is 200 MHz, and another bandwidth other than the bandwidth of the current Wi-Fi channel can be used. Therefore, the bandwidth of the current Wi-Fi channel can be effectively utilized, bandwidth utilization can be improved, and a data transmission rate can be improved.

As shown in FIG. 5, a design of 200 M in a U-SIG field is as follows: 200 M is a new bandwidth, and a BW field in the U-SIG needs to be extended. The U-SIG field is modified as follows: The BW field indicates the bandwidth in the U-SIG, and has a total of three bits, corresponding to B3 to B5. In this embodiment of this application, an added value is 6, corresponding to 200 MHz.

**Table 6 Definition of the BW in the U-SIG**

| B3 to B5 | PPDU bandwidth (MHz) |
|---|---|
| 0 | 20 |
| 1 | 40 |
| 2 | 80 |
| 3 | 160 |
| 4 | 320 MHz-1 |
| 5 | 320 MHz-2 |
| 6 | 200 MHz |

Further, in some embodiments of this application, in addition to performing step 201 and step 202 by the communication device, the data transmission method performed by the communication device may further include the following step:

Step G1: Perform segmentation parsing on the data to obtain the following four frequency subblocks whose frequency ranges are in ascending order in sequence: a first frequency subblock, a second frequency subblock, a third frequency subblock, and a fourth frequency subblock.

It is determined that a number of resource units included in the first frequency subblock is 242, that a number of resource units included in the second frequency subblock is 996, that a number of resource units included in the third frequency subblock is 996, and that a number of resource units included in the fourth frequency subblock is 242; and determine, when dual-carrier modulation is used for none of the first frequency subblock, the second frequency subblock, the third frequency subblock, and the fourth frequency subblock, that a number $N_{CBPSS}$ of coded bits per symbol of the first frequency subblock is equal to $234 \times N_{BPSCS}$, that a number of coded bits per symbol of the second frequency subblock is equal to $980 \times N_{BPSCS}$, that a number of coded bits per symbol of the third frequency subblock is equal to $980 \times N_{BPSCS}$, and that a number of coded bits per symbol of the fourth frequency subblock is equal to $234 \times N_{BPSCS}$, where $N_{BPSCS}$ represents a number of coded bits per subcarrier.

Segmentation parsing is performed on to-be-transmitted data to obtain four frequency segments, that is, the following four frequency subblocks whose frequency ranges are in ascending order in sequence: the first frequency subblock, the second frequency subblock, the third frequency subblock, and the fourth frequency subblock. Based on the foregoing description, it can be learned that, based on the 802.11be protocol, an added MRU type is $242 + 2 \times 996 + 242$. In this case, the quantities of resource elements respectively included in the four frequency subblocks is as follows: The number of resource elements included in the first frequency subblock is 242, the number of resource elements included in the second frequency subblock is 996, the number of resource elements included in the third frequency subblock is 996, and the number of resource elements included in the fourth frequency subblock is 242.

Segmentation parsing needs to be considered because the bandwidth is greater than 80 MHz. Four frequency subblocks through division based on segmentation parsing of $242 + 2 \times 996 + 242$. Specific processing is shown in Table 7.

**Table 7 Value of $N_{CBPSS,u}$ of a user u under an MRU of $242 + 2 \times 996 + 242$**

| MRU | RU order(low to high frequency) | L | Is DCM used? | $N_{CBPSS,0,u}$ | $N_{CBPSS,1,u}$ | $N_{CBPSS,2,u}$ | $N_{CBPSS,3,u}$ |
|---|---|---|---|---|---|---|---|
| 242 + 2 x 996 + 242 | 242 + 996 + 996 + 242 | 4 | No | 234 x $N_{BPSCS,u}$ | 980 x $N_{BPSCS,u}$ | 980 x $N_{BPSCS,u}$ | 234 x $N_{BPSCS,u}$ |

$N_{CBPSS,0,u}$ represents $N_{CBPSS}$ of the user u on a frequency subblock 0, and $N_{CBPSS,1,u}$ represents $N_{CBPSS}$ of the user u on a frequency subblock 1. $N_{BPSCS,u}$ represents $N_{BPSCS}$ of the user u. $N_{CBPSS,2,u}$ represents $N_{CBPSS}$ of the user u on a frequency subblock 2, and $N_{CBPSS,3,u}$ represents $N_{CBPSS}$ of the user u on a frequency subblock 4.

In a scenario in which the bandwidth of the target channel is 200 MHz, a block diagram of a structure of a transmitter is similar to that in FIG. 6A and FIG. 6B. A difference lies in that, in the scenario of 200 MHz, data stream parsing (Stream Parse) is first performed, a data stream is divided into four frequency subblocks, and a processing procedure on each frequency subblock is similar to that in FIG. 6A and FIG. 6B.

A 200-M baseband waveform is generated in the foregoing 200-M PPDU transmission path. A dual-side bandwidth of an analog-side LPF is set to 200 MHz. If the bandwidth of the low-pass filter is less than 2000 MHz, an in-band effective signal is filtered. If the bandwidth of the low-pass filter is greater than 200 MHz, the anti-interference performance of an adjacent channel is affected. A value, such as 198 MHz, around 200 MHz is also feasible, but a deviation cannot be excessively large.

The following describes a segmentation parsing procedure in the foregoing procedure.

In some embodiments of this application, in addition to performing step 201 and step 202 by the communication device, the data transmission method performed by the communication device may further include the following steps:

Step H1: Perform segmentation parsing on the data to obtain the following four frequency subblocks whose frequency ranges are in ascending order in sequence: a first frequency subblock, a second frequency subblock, a third frequency subblock, and a fourth frequency subblock.

Step H2: Determine that a number of resource units included in the first frequency subblock is 242, that a number of resource units included in the second frequency subblock is 996, that a number of resource units included in the third frequency subblock is 996, and that a number of resource units included in the fourth frequency subblock is 242.

Step H3: Determine, when dual-carrier modulation is used for none of the first frequency subblock, the second frequency subblock, the third frequency subblock, and the fourth frequency subblock, that an assignment proportion parameter $m_0$ of the first frequency subblock is equal to s, that an assignment proportion parameter $m_1$ of the second frequency subblock is equal to 4s, that an assignment proportion parameter $m_2$ of the third frequency subblock is equal to 4s, and that an assignment proportion parameter $m_3$ of the fourth frequency subblock is equal to s; and determine that respective leftover bits of the second frequency subblock and the third frequency subblock are equal to $44 \times N_{BPSCS}$, where

$$s = \max\left(1, \frac{N_{BPSCS}}{2}\right),$$

and $N_{BPSCS}$ represents a number of coded bits per subcarrier.

For different values of the first frequency subblock, the second frequency subblock, the third frequency subblock, and the fourth frequency subblock, values of the assignment proportion parameters of all the frequency subblocks are also different. This is specifically shown in Table 8 below.

**Table 8 Segmentation parsing parameter (Segment parser parameter) of an MRU of 242 + 2 x 996 + 242**

| MRU | RU order(low to high frequency) | L | Is DCM used? | $m_0$ | $m_1$ | $m_2$ | $m_3$ | Leftover bits per frequency subblock |
|---|---|---|---|---|---|---|---|---|
| 242 + 2 x 996 + 242 | 242 + 996 + 996 + 242 | 4 | No | 1s | 4s | 4s | 1s | 44 x $N_{BPSCS,u}$ |

In some embodiments of this application, the determining a target channel based on the channel assessment result in step 202 includes the following step:

Step I1: Determine, when the primary channel is idle, the first secondary channel is idle, the second secondary channel is idle, the third secondary channel is idle, the fourth secondary channel is idle, and the fifth secondary channel is idle, that the bandwidth of the target channel is a sum of the bandwidth of the primary channel, the bandwidth of the first secondary channel, the bandwidth of the second secondary channel, the bandwidth of the third secondary channel, the bandwidth of the fourth secondary channel, and the bandwidth of the fifth secondary channel.

The target channel may include: the primary channel, the first secondary channel, the second secondary channel, the third secondary channel, the fourth secondary channel, and the fifth secondary channel. Clear channel assessment is performed on each of the foregoing channels, to determine an idle state of each of the primary channel, the first secondary channel, the second secondary channel, the third secondary channel, the fourth secondary channel, and the fifth secondary channel. When the primary channel, the first secondary channel, the second secondary channel, the third secondary channel, the fourth secondary channel, and the fifth secondary channel are all idle, the bandwidth of the target channel may be obtained by using the sum of the bandwidth of the primary channel, the bandwidth of the first secondary channel, the bandwidth of the second secondary channel, the bandwidth of the third secondary channel, the bandwidth of the fourth secondary channel, and the bandwidth of the fifth secondary channel. In this embodiment of this application, the bandwidth of the target channel is 200 MHz, and another bandwidth other than the bandwidth of the current Wi-Fi channel can be used. Therefore, the bandwidth of the current Wi-Fi channel can be effectively utilized, bandwidth utilization can be improved, and a data transmission rate can be improved.

203: Send data to a receiving end through the target channel, or receive data from a transmitting end through the target channel.

After the target channel is obtained, data transmission may be performed based on the bandwidth of the target channel. For example, when the communication device is the transmitting end, the transmitting end may send data to the receiving end through the target channel. When the communication device is the receiving end, the receiving end may receive data from the transmitting end through the target channel. A specific procedure of transmitting data through the target channel in this embodiment of this application is not described in detail.

It can be learned from the example description of the foregoing embodiments that, clear channel assessment is performed on the existing Wi-Fi channel to obtain the channel assessment result of the existing Wi-Fi channel, and then the target channel is determined based on the channel assessment result, where the bandwidth of the target channel is greater than 80 MHz, and the bandwidth of the target channel is not the bandwidth of the existing Wi-Fi channel, that is, the bandwidth of the target channel may be another bandwidth value other than the bandwidth of the Wi-Fi channel, so that data can be received and sent based on the bandwidth of the target channel. In embodiments of this application, channels of some frequency bands of the Wi-Fi channel are fully utilized, and another bandwidth other than the bandwidth of the current Wi-Fi channel can be used for the bandwidth of the determined target channel. Therefore, the bandwidth of the current Wi-Fi channel can be effectively utilized, bandwidth utilization can be improved, and a data transmission rate can be improved.

For better understanding and implementation of the foregoing solutions in embodiments of this application, specific descriptions are provided below by using corresponding application scenarios as examples.

The bandwidth of the current Wi-Fi channel is 2 to a power times 20 M, for example, 20 MHz, 40 MHz, 80 MHz, 160 MHz, or 320 MHz. The current Wi-Fi channel may also be referred to as the existing Wi-Fi channel. In this embodiment of this application, a bandwidth, that is, a 100 MHz bandwidth or a 200 MHz bandwidth, not specified in a standard protocol is supported to be used for Wi-Fi. In addition, the use of the 100 MHz bandwidth needs to resolve the coexistence and interoperability problems between 80 MHz (including 40 MHz and 20 MHz) and 100 MHz components and working modes. For example, if a maximum bandwidth is 80 M, PPDU transmission of a 40 MHz bandwidth or a 20 MHz bandwidth is also supported. The use of the 200 MHz bandwidth needs to resolve the coexistence and interoperability problems between 160 MHz (including 80 MHz, 40 MHz, and 20 MHz) and 200 MHz components and working modes. For example, if a maximum bandwidth is 160 MHz, PPDU transmission of an 80-M bandwidth, a 40-M bandwidth, or a 20 MHz bandwidth is supported.

The following provides two typical embodiments of embodiments of this application.

In Embodiment 1 of this application, a 100 MHz bandwidth implementation solution is used as an example, and a 5.735-5.835 GHz frequency band in China is used as an example. Actual channel division is as follows:

**Table 9 List of wireless local area network channels of a 5.735-5.835 GHz subband in China**

| Frequency channel number (Channel) | Center frequency (Center Frequency) (MHz) | Frequency range (Frequency Range) (MHz) | 20 MHz | 40 MHz | 80 MHz | 160 MHz | China (China) |
|---|---|---|---|---|---|---|---|
| 149 | 5745 | 5735-5755 | 20 | | | x | Yes |
| 151 | 5755 | 5735-5775 | | 40 | | x | No |
| 153 | 5765 | 5755-5775 | 20 | | | x | Yes |
| 155 | 5775 | 5735-5815 | | | 80 | x | No |
| 157 | 5785 | 5775-5795 | 20 | | | x | Yes |
| 159 | 5795 | 5775-5815 | | 40 | | x | No |
| 161 | 5805 | 5795-5815 | 20 | | | x | Yes |
| 165 | 5825 | 5815-5835 | 20 | x | x | x | Yes |

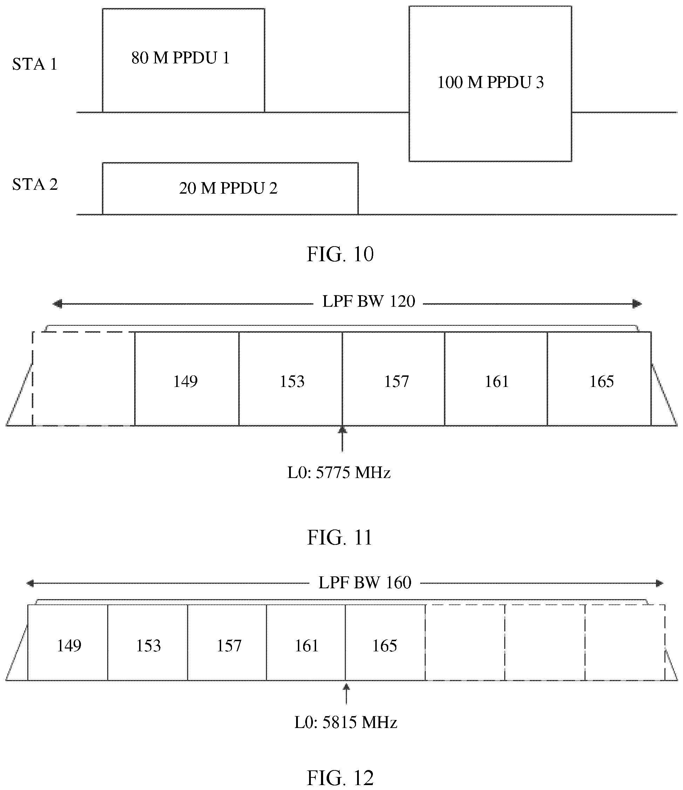

It is considered that, in China, there is a total of 100 MHz bandwidth in the 5.735-5.835 GHz frequency band. According to the current 802.11 protocol, a maximum of 80 MHz bandwidth can be used. In this embodiment of this application, two basic service sets (basic service sets, BSSs) are included. A BSS 1 includes an AP 1 and a STA 1, a center frequency of the AP 1 is located at 5775 MHz, a primary (Primary) channel is located at 153, a secondary (secondary) channel 20 is located at 149, and a secondary channel 40 is located at 159. The AP1 supports 80-M or 100-M PPDU transmission. A BSS 2 includes an AP 2 and a STA 2, a center frequency of the AP 2 is located at 5825 MHz, and a channel bandwidth is 20 MHz. FIG. 10 is a diagram of a 100 MHz bandwidth in which an 80 MHz bandwidth PPDU and a 20 MHz bandwidth PPDU coexist according to an embodiment of this application. Before an AP 1 or a STA 1 sends a PPDU 1, a STA 2 sends a 20-M bandwidth PPDU 2 through a channel 165, and finds, through 100-M CCA, that 20 M of the channel 165 is in a busy state (BUSY), and 80 M of the channel 155 is in an idle state (IDLE). Therefore, the AP 1 or the STA 1 transmits data by using an 80-M PPDU of an existing protocol. Before sending a PPDU 3, the AP 1 or the STA 1 finds, through the 100-M CCA, that the channel 149 to the channel 165 are all in the idle state. Therefore, the AP 1 or the STA 1 transmits data by using the solution 100-M PPDU in this embodiment of this application.

For the 100-M PPDU, a U-SIG is configured in Table 10 below.

**Table 10 U-SIG configuration table**

| U-SIG | Bit | Field (Field) | Number of bits (Number of bits) | Value (Value) | Description |
|---|---|---|---|---|---|
| | B0 to B2 | PHY version identifier | 3 | 0 | EHT is set to 0. |
| | B3 to B5 | Bandwidth | 3 | 3 | 160 MHz, where a value is 3. |
| | B6 | UL/DL | 1 | | Indicates whether the PPDU is sent in UL or DL, where a value 1 indicates that the PPDU addresses an AP, and a value 0 indicates that the PPDU is addressed to a non-AP STA. |
| | B7 to B12 | BSS color | 6 | xxx | BSS identifier |
| | B13 to B19 | TXOP | 7 | xxx | Duration of the PPDU |
| | ... | ... | ... | ... | ... |
| | B3 to B7 | Punctured channel information | 5 | 13 | 160 MHz, where a value is 13, and puncturing of a 60 MHz bandwidth exists. |

FIG. 11 is a diagram of an LPF mode 1 of a 100 MHz PPDU in a 5.735-5.835 GHz frequency band according to an embodiment of this application. In the mode 1 of this embodiment, an AP 1 and a STA 1 set a center frequency to 5775 MHz, and set a dual-side bandwidth of an analog filter to 120 MHz. Therefore, the AP 1 and the STA 1 may receive signals of 5735-5835 MHz.

FIG. 12 is a diagram of an LPF mode 2 of a 100 MHz PPDU in a 5.735-5.835 GHz frequency band according to an embodiment of this application. In the mode 2 of this embodiment, an AP 1 and a STA set a center frequency to 5815 MHz, and set a dual-side bandwidth of an analog filter to 160 MHz. Therefore, the AP 1 and the STA 1 may receive signals of 5735-5835 MHz.

In comparison, the mode 1 can better resist adjacent channel interference on the right, and the mode 2 can better resist adjacent channel interference on the left.

Next, Embodiment 2 of this application is described by using an example in which a bandwidth is 200 MHz. A 5.150-5.350 GHz frequency band of the European Telecommunications Standards Institute (European Telecommunications Standards Institute, ETSI) is used as an example. Actual channel division is shown in Table 11 below.

**Table 11 List of wireless local area network channels of a 5.150-5.350 GHz subband in Europe**

| Channel | Center frequency (MHz) | Frequency range (MHz) | 20 MHz | 40 MHz | 80 MHz | 160 MHz | Europe (Europe) |
|---|---|---|---|---|---|---|---|
| 32 | 5160 | 5150-5190 | 20 | x | x | x | No |

(continued)

| Channel | Center frequency (MHz) | Frequency range (MHz) | 20 MHz | 40 MHz | 80 MHz | 160 MHz | Europe (Europe) |
|---|---|---|---|---|---|---|---|
| 36 | 5180 | 5170-5190 | 20 | | | | Yes |
| 38 | 5190 | 5170-5210 | | 40 | | | No |
| 40 | 5200 | 5190-5210 | 20 | | | | Yes |
| 42 | 5210 | 5170-5250 | | | 80 | | No |
| 44 | 5220 | 5210-5230 | 20 | | | | Yes |
| 46 | 5230 | 5210-5270 | | 40 | | | No |
| 48 | 5240 | 5230-5250 | 20 | | | | Yes |
| 50 | 5250 | 5170-5330 | | | | 160 | No |
| 52 | 5260 | 5250-5270 | 20 | | | | Yes |
| 54 | 5270 | 5250-5290 | | 40 | | | No |
| 56 | 5280 | 5270-5290 | 20 | | | | Yes |
| 58 | 5290 | 5250-5330 | | | 80 | | No |
| 60 | 5310 | 5290-5310 | 20 | | | | Yes |
| 62 | 5320 | 5290-5330 | | 40 | | | No |
| 64 | 5330 | 5310-5330 | 20 | | | | Yes |
| 68 | 5340 | 5330-5350 | 20 | x | x | x | No |

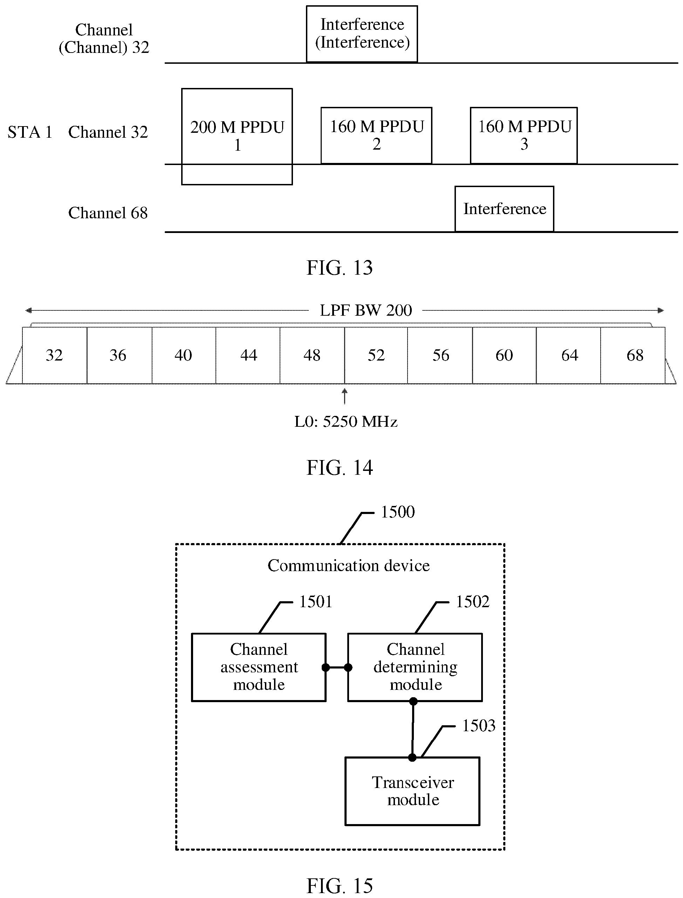

It is considered that, in Europe, there is a total of 200 MHz bandwidth in the 5.150-5.350 GHz frequency band. According to the current 802.11 protocol, a maximum of 160 MHz bandwidth of a channel 50 can be used. In this embodiment of this application, one BSS is included, including an AP 1 and a STA 1. A center frequency of the AP 1 is located at 5250 MHz, a primary channel is located at 36, a secondary channel 20 is located at 40, a secondary channel 40 is located at 46, and a secondary channel 80 is located at 58. The AP 1 and the STA 1 support transmission of a 200-M PPDU. FIG. 13 is a diagram of a 200 MHz bandwidth in which 160 MHz bandwidth PPDUs coexist according to an embodiment of this application. Before sending a PPDU 1, the AP 1 or the STA 1 finds, through 200-M CCA, that a channel 32 to a channel 68 are all in an idle state (IDLE). Therefore, the STA 1 transmits the 200-M PPDU by using the solution in this embodiment of this application. Before sending a PPDU 2, the AP1 or the STA1 finds, through the 200-M CCA, that the entire channel 32 is in a busy state (BUSY). Therefore, the AP 1 or the STA 1 transmits data by using a 160-M PPDU of an existing protocol. Before sending a PPDU 3, the AP 1 or the STA 1 finds, through the 200-M CCA, that the entire channel 68 is in a busy state (BUSY). Therefore, the AP 1 or the STA 1 transmits data by using a 160-M PPDU of the existing protocol.

For the 200-M PPDU, a U-SIG is configured in Table 12 below.

**Table 12 U-SIG configuration table**

| U-SIG | Bit | Field | Number of bits | Value | Description |
|---|---|---|---|---|---|
| | B0 to B2 | PHY version identifier | 3 | 0 | EHT is set to 0. |
| | B3 to B5 | Bandwidth | 3 | 6 | 200 MHz, where a value is |
| | | | | 6. | |
| | B6 | UL/DL | 1 | x | Indicates whether the PPDU is sent in UL or DL, where a value 1 indicates that the PPDU addresses an AP, and a value 0 indicates that the PPDU is addressed to a non-AP STA. |

(continued)

| U-SIG | Bit | Field | Number of bits | Value | Description |
|---|---|---|---|---|---|
| | B7 to B12 | BSS color | 6 | xxxxxx | BSS identifier |
| | B13 to B19 | TXOP | 7 | xxxxxxx | Duration of the PPDU |
| | ... | ... | ... | ... | ... |
| | B3 to B7 | Punctured channel information | 5 | 0 | If this value is set to 0, it indicates that no puncturing is performed. |

FIG. 14 is a diagram of an LPF mode of a 200-M PPDU in a 5.15-5.35 GHz frequency band according to an embodiment of this application. An analog LPF bandwidth is extended to 200 MHz. Therefore, an AP 1 and a STA 1 may receive signals of 5150-5350 MHz.

It can be learned from the foregoing example description that there are some idle 20 MHz channels in the Wi-Fi industrial, scientific, and medical (Industrial Scientific & Medical, ISM) frequency spectrum, and the current 802.11 protocol supports only the use of bandwidths of 20 MHz, 40 MHz, 80 MHz, 160 MHz, and 320 MHz. Due to this limitation, channels in some frequency bands in the 5G frequency band cannot be fully utilized. The 100-M and 200-M bandwidth transmission methods provided in embodiments of this application fill a bandwidth usage gap, and can effectively use a current existing bandwidth, improve a transmission rate, and bring better user experience.

In a solution design process of this embodiment of this application, compatibility with an existing protocol is considered. A 100 MHz bandwidth may be compatible with 80 MHz, 40 MHz, and 20 MHz transmission in the 802.11 protocol, and a 200 MHz bandwidth may be compatible with 160 MHz, 80 MHz, 40 MHz, and 20 MHz transmission in the 802.11 protocol. In addition, a reserved (reserved) field in a current protocol is considered, and the solution design and protocol compatibility are completed on the premise that a number of bits is not increased.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to example embodiments, and the involved actions and modules are not necessarily required by this application.

To better implement the solutions of embodiments of this application, a related apparatus for implementing the foregoing solutions is further provided below.

Refer to FIG. 15. A communication device 1500 provided in an embodiment of this application may include a channel assessment module 1501, a channel determining module 1502, and a transceiver module 1503.

The channel assessment module 1501 is configured to perform clear channel assessment on an existing wireless fidelity Wi-Fi channel to obtain a channel assessment result.

The channel determining module 1502 is configured to determine a target channel based on the channel assessment result, where a bandwidth of the target channel is greater than 80 megahertz MHz, and the bandwidth of the target channel is not a bandwidth of the existing Wi-Fi channel.

The transceiver module 1503 is configured to send data to a receiving end through the target channel, or receive data from a transmitting end through the target channel.

It can be learned from the example description of the foregoing embodiments that, in embodiments of this application, clear channel assessment is performed on the existing Wi-Fi channel to obtain the channel assessment result of the existing Wi-Fi channel, and then the target channel is determined based on the channel assessment result, where the bandwidth of the target channel is greater than 80 MHz, and the bandwidth of the target channel is not the bandwidth of the existing Wi-Fi channel, that is, the bandwidth of the target channel may be another bandwidth value other than the bandwidth of the Wi-Fi channel, so that data can be received and sent based on the bandwidth of the target channel. In embodiments of this application, channels of some frequency bands of the Wi-Fi channel are fully utilized, and another bandwidth other than the bandwidth of the current Wi-Fi channel can be used for the bandwidth of the determined target channel. Therefore, the bandwidth of the current Wi-Fi channel can be effectively utilized, bandwidth utilization can be improved, and a data transmission rate can be improved.

It should be noted that, content such as information exchange between the modules/units of the apparatus and the execution processes thereof is based on the same idea as the method embodiments of this application, and produces the same technical effects as the method embodiments of this application. For specific content, refer to the foregoing descriptions in the method embodiments of this application. Details are not described herein again.

An embodiment of this application further provides a computer storage medium. The computer storage medium stores a program, and the program performs a part or all of the steps described in the foregoing method embodiments.

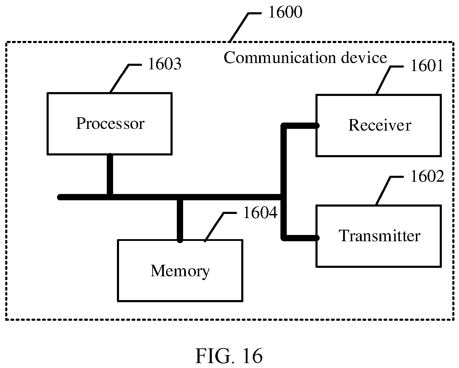

The following describes another communication device provided in an embodiment of this application. Refer to FIG. 16. A communication device 1600 includes:

a receiver 1601, a transmitter 1602, a processor 1603, and a memory 1604 (where there may be one or more processors 1603 in the communication device 1600, and an example in which there is one processor is used in FIG. 16). In some embodiments of this application, the receiver 1601, the transmitter 1602, the processor 1603, and the memory 1604 may be connected through a bus or in another manner, and a connection by using the bus is used as example in FIG. 16.

The memory 1604 may include a read-only memory and a random access memory, and provide instructions and data for the processor 1603. A part of the memory 1604 may further include a non-volatile random access memory (non-volatile random access memory, NVRAM). The memory 1604 stores an operating system and an operation instruction, an executable module or a data structure, a subset thereof, or an extended set thereof. The operation instruction may include various operation instructions for performing various operations. The operating system may include various system programs, to implement various basic services and process a hardware-based task.

The processor 1603 controls an operation of the communication device, and the processor 1603 may also be referred to as a central processing unit (central processing unit, CPU). During specific application, components of the communication device are coupled together by using a bus system. In addition to a data bus, the bus system may further include a power bus, a control bus, a status signal bus, and the like. However, for clear description, various types of buses in the figure are marked as the bus system.

The methods disclosed in embodiments of this application may be applied to the processor 1603 or may be implemented by the processor 1603. The processor 1603 may be an integrated circuit chip and has a signal processing capability. In an implementation process, various steps in the foregoing methods may be completed by using an integrated logic circuit of hardware in the processor 1603 or instructions in a form of software. The processor 1603 may be a general-purpose processor, a digital signal processor (digital signal processor, DSP), an application-specific integrated circuit (application-specific integrated circuit, ASIC), a field-programmable gate array (field-programmable gate array, FPGA) or another programmable logical device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed and accomplished by a hardware decoding processor, or may be performed and accomplished by using a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in the memory 1604, and the processor 1603 reads information in the memory 1604 and completes the steps in the foregoing methods in combination with hardware of the processor.

The receiver 1601 may be configured to receive input digital or character information, and generate a signal input related to a related setting and function control of the communication device. The transmitter 1602 may include a display device such as a display screen, and the transmitter 1602 may be configured to output digital or character information by using an external interface.

In this embodiment of this application, the processor 1603 is configured to perform the steps in the data transmission method shown in FIG. 2.

In another possible design, when the communication device is a chip in a terminal, the chip includes a processing unit and a communication unit. The processing unit may be, for example, a processor, and the communication unit may be, for example, an input/output interface, a pin, or a circuit. The processing unit can execute computer-executable instructions stored in the storage unit, to enable the chip in the terminal to perform the method according to any one of the first aspect. Optionally, the storage unit is a storage unit in the chip, for example, a register or a cache. Alternatively, the storage unit may be a storage unit that is in the terminal and that is located outside the chip, for example, a read-only memory (read-only memory, ROM) or another type of static storage device that can store static information and instructions, or a random access memory (random access memory, RAM).

The processor mentioned anywhere above may be a general-purpose central processing unit, a microprocessor, an ASIC, or one or more integrated circuits that are configured to control program execution of the method according to the first aspect.

In addition, it should be noted that the described apparatus embodiments are merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of the embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a server, or a network device) to perform the methods described in embodiments of this application.

All or some of the foregoing embodiments may be implemented by using software, hardware, firmware, or any combination thereof. When software is used to implement the embodiments, all or a part of embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, (Solid-State Drive, SSD)), or the like.

## Claims

1. A data transmission method, comprising:

   performing clear channel assessment on an existing wireless fidelity Wi-Fi channel to obtain a channel assessment result;
   determining a target channel based on the channel assessment result, wherein a bandwidth of the target channel is greater than 80 megahertz MHz, and the bandwidth of the target channel is not a bandwidth of the existing Wi-Fi channel; and
   sending data to a receiving end through the target channel, or receiving data from a transmitting end through the target channel.

2. The method according to claim 1, wherein the bandwidth of the target channel is obtained by performing puncturing or splicing on the bandwidth of the existing Wi-Fi channel.

3. The method according to claim 2, wherein the method further comprises:
   sending signaling to the receiving end, wherein the signaling is used to notify the bandwidth of the target channel, and/or is used to notify a bandwidth position at which puncturing or splicing is performed on the bandwidth of the existing Wi-Fi channel.

4. The method according to any one of claims 1 to 3, wherein the bandwidth of the target channel is 100 MHz; the target channel comprises a primary channel, a first secondary channel, a second secondary channel, and a third secondary channel;

   a bandwidth of the primary channel is 20 MHz; and

a bandwidth of the first secondary channel is 20 MHz, a bandwidth of the second secondary channel is 40 MHz, and a bandwidth of the third secondary channel is 20 MHz.

5. The method according to claim 4, wherein the primary channel, the first secondary channel, and the second secondary channel are used to carry 996 resource block units RUs;

the third secondary channel is used to carry 242 resource block units; and
a subcarrier index of a 100 MHz bandwidth in a 160 MHz bandwidth is reused as a subcarrier index of the target channel.

6. The method according to claim 5, wherein the signaling comprises preamble information, and
the preamble information indicates that the bandwidth of the target channel is 100 MHz, and/or indicate three punctured 20 MHz bandwidths in the 160 MHz bandwidth.

7. The method according to claim 6, wherein the preamble information comprises a universal signal field; and

the universal signal field comprises a bandwidth field and/or a punctured channel information field, wherein
the bandwidth field indicates that the bandwidth of the target channel is 100 MHz; and/or
the punctured channel information field indicates the three punctured 20 MHz bandwidths in the 160 MHz bandwidth.

8. The method according to claim 7, wherein the punctured channel information field comprises puncturing pattern information;

the puncturing pattern information is eight bits, and values of the eight bits are sequentially 11111000, 00011111, 11110100, 11110010, 11110001, 01001111, 00101111, or 10001111; and
1 represents a 20 MHz bandwidth that is not punctured, and 0 represents a 20 MHz bandwidth that is punctured.

9. The method according to any one of claims 4 to 8, wherein the method further comprises:

performing segmentation parsing on the data to obtain a first frequency subblock and a second frequency subblock, wherein a frequency range of the first frequency subblock is lower than a frequency range of the second frequency subblock; and
determining that a number of resource units comprised in the first frequency subblock is 996 and that a number of resource units comprised in the second frequency subblock is 242; and determining, when dual carrier modulation DCM is not used for the first frequency subblock, that a number $N_{CBPSS}$ of coded bits per symbol of the first frequency subblock is equal to $980 \times N_{BPSCS}$ and that a number of coded bits per symbol of the second frequency subblock is equal to $234 \times N_{BPSCS}$; or determining, when dual carrier modulation DCM is used for the first frequency subblock and the second frequency subblock, that a number of coded bits per symbol of the first frequency subblock is equal to 490 and that a number of coded bits per symbol of the second frequency subblock is equal to 117; or
determining that a number of resource units comprised in the first frequency subblock is 242 and that a number of resource units comprised in the second frequency subblock is 996; and determining, when dual carrier modulation DCM is used for neither the first frequency subblock nor the second frequency subblock, that a number of coded bits per symbol of the first frequency subblock is equal to $234 \times N_{BPSCS}$ and that a number of coded bits per symbol of the second frequency subblock is equal to $980 \times N_{BPSCS}$; or determining, when dual-carrier modulation is used for the first frequency subblock and the second frequency subblock, that a number of coded bits per symbol of the first frequency subblock is equal to 117 and that a number of coded bits per symbol of the second frequency subblock is equal to 490, wherein
$N_{BPSCS}$ represents a number of coded bits per subcarrier.

10. The method according to any one of claims 4 to 9, wherein the method further comprises:

performing segmentation parsing on the data to obtain a first frequency subblock and a second frequency subblock, wherein a frequency range of the first frequency subblock is lower than a frequency range of the second frequency subblock; and
determining that a number of resource units comprised in the first frequency subblock is 996 and that a number of resource units comprised in the second frequency subblock is 242; determining that an assignment proportion

parameter $m_0$ of the first frequency subblock is equal to 4s and that an assignment proportion parameter $m_1$ of the second frequency subblock is equal to s; and determining, when dual-carrier modulation iis used for neither the first frequency subblock nor the second frequency subblock, that leftover bits of the first frequency subblock are equal to $44 \times N_{BPSCS}$; or determining, when dual-carrier modulation is used for the first frequency subblock and the second frequency subblock, that leftover bits of the first frequency subblock are equal to 22; or determining that a number of resource units comprised in the first frequency subblock is 242 and a number of resource units comprised in the second frequency subblock is 996; determining that an assignment proportion parameter $m_0$ of the first frequency subblock is equal to s and that an assignment proportion parameter $m_1$ of the second frequency subblock is equal to 4s; and determining, when dual-carrier modulation iis used for neither the first frequency subblock nor the second frequency subblock, that leftover bits of the second frequency subblock are equal to $44 \times N_{BPSCS}$; or determining, when dual-carrier modulation is used for the first frequency subblock and the second frequency subblock, that leftover bits of the second frequency subblock are equal to 22, wherein

$$s = \max\left(1, \frac{N_{BPSCS}}{2}\right),$$

and $N_{BPSCS}$ represents a number of coded bits per subcarrier.

11. The method according to any one of claims 4 to 10, wherein the method further comprises:

performing a frequency shift on a time domain signal of the data on each antenna based on 40 MHz, wherein 40 MHz is a frequency difference between a baseband center frequency of the 160 MHz bandwidth and a baseband center frequency of an 80 MHz bandwidth in which the primary channel is located.

12. The method according to any one of claims 4 to 11, wherein the determining a target channel based on the channel assessment result comprises:
determining, when the primary channel is idle, the first secondary channel is idle, the second secondary channel is idle, and the third secondary channel is idle, that the bandwidth of the target channel is a sum of the bandwidth of the primary channel, the bandwidth of the first secondary channel, the bandwidth of the second secondary channel, and the bandwidth of the third secondary channel.

13. The method according to any one of claims 4 to 12, wherein the method further comprises:
determining, when the third secondary channel is busy, the target channel depending on whether the primary channel is idle, whether the first secondary channel is idle, and whether the second secondary channel is idle.

14. The method according to any one of claims 1 to 3, wherein the bandwidth of the target channel is 200 MHz; the target channel comprises: a primary channel, a first secondary channel, a second secondary channel, a third secondary channel, a fourth secondary channel, and a fifth secondary channel;

a bandwidth of the primary channel is 20 MHz; and
a bandwidth of the first secondary channel is 20 MHz, a bandwidth of the second secondary channel is 40 MHz, a bandwidth of the third secondary channel is 80 MHz, a bandwidth of the fourth secondary channel is 20 MHz, and a bandwidth of the fifth secondary channel is 20 MHz.

15. The method according to claim 14, wherein the primary channel, the first secondary channel, and the second secondary channel are used to carry 996 resource block units;

the third secondary channel is used to carry 996 resource block units;
the fourth secondary channel is used to carry 242 resource block units;
the fifth secondary channel is used to carry 242 resource block units; and
a subcarrier index of a 200 MHz bandwidth in a 320 MHz bandwidth is reused as a subcarrier index of the target channel.

16. The method according to claim 3, wherein the signaling comprises preamble information, and
the preamble information indicates that the bandwidth of the target channel is 200 MHz.

17. The method according to claim 16, wherein the preamble information comprises a universal signal field; and

the universal signal field comprises a bandwidth field, wherein
the bandwidth field indicates that the bandwidth of the target channel is 200 MHz.

18. The method according to any one of claims 14 to 17, wherein the method further comprises:

performing segmentation parsing on the data to obtain the following four frequency subblocks whose frequency ranges are in ascending order in sequence: a first frequency subblock, a second frequency subblock, a third frequency subblock, and a fourth frequency subblock; and
determining that a number of resource units comprised in the first frequency subblock is 242, that a number of resource units comprised in the second frequency subblock is 996, that a number of resource units comprised in the third frequency subblock is 996, and that a number of resource units comprised in the fourth frequency subblock is 242; and determining, when dual-carrier modulation is used for none of the first frequency subblock, the second frequency subblock, the third frequency subblock, and the fourth frequency subblock, that a number $N_{CBPSS}$ of coded bits per symbol of the first frequency subblock is equal to $234 \times N_{BPSCS}$, that a number of coded bits per symbol of the second frequency subblock is equal to $980 \times N_{BPSCS}$, that a number of coded bits per symbol of the third frequency subblock is equal to $980 \times N_{BPSCS}$, and that a number of coded bits per symbol of the fourth frequency subblock is equal to $234 \times N_{BPSCS}$, wherein
$N_{BPSCS}$ represents a number of coded bits per subcarrier.

19. The method according to any one of claims 14 to 18, wherein the method further comprises:

performing segmentation parsing on the data to obtain the following four frequency subblocks whose frequency ranges are in ascending order in sequence: a first frequency subblock, a second frequency subblock, a third frequency subblock, and a fourth frequency subblock;
determining that a number of resource units comprised in the first frequency subblock is 242, that a number of resource units comprised in the second frequency subblock is 996, that a number of resource units comprised in the third frequency subblock is 996, and that a number of resource units comprised in the fourth frequency subblock is 242; and
determining, when dual-carrier modulation is used for none of the first frequency subblock, the second frequency subblock, the third frequency subblock, and the fourth frequency subblock, that an assignment proportion parameter $m_0$ of the first frequency subblock is equal to s, that an assignment proportion parameter $m_1$ of the second frequency subblock is equal to 4s, that an assignment proportion parameter $m_2$ of the third frequency subblock is equal to 4s, and that an assignment proportion parameter $m_3$ of the fourth frequency subblock is equal to s; and determining that respective leftover bits of the second frequency subblock and the third frequency subblock are equal to $44 \times N_{BPSCS}$, wherein

$$s = \max\left(1, \frac{N_{BPSCS}}{2}\right),$$

and $N_{BPSCS}$ represents a number of coded bits per subcarrier.

20. The method according to any one of claims 14 to 19, wherein the determining a target channel based on the channel assessment result comprises:
determining, when the primary channel is idle, the first secondary channel is idle, the second secondary channel is idle, the third secondary channel is idle, the fourth secondary channel is idle, and the fifth secondary channel is idle, that the bandwidth of the target channel is a sum of the bandwidth of the primary channel, the bandwidth of the first secondary channel, the bandwidth of the second secondary channel, the bandwidth of the third secondary channel, the bandwidth of the fourth secondary channel, and the bandwidth of the fifth secondary channel.

21. A communication device, wherein the communication device comprises a processor and a memory, and the processor and the memory communicate with each other, wherein

the memory is configured to store instructions; and
the processor is configured to execute the instructions in the memory, to perform the method according to any one of claims 1 to 20.

22. A computer-readable storage medium, comprising instructions; when the instructions are run on a computer, the computer is enabled to perform the method according to any one of claims 1 to 20.

**23.** A computer program product comprising instructions; when the computer program product runs on a computer, the computer is enabled to perform the method according to any one of claims 1 to 20.

FIG. 1

201

Perform clear channel assessment on an existing wireless fidelity Wi-Fi channel to obtain a channel assessment result

202

Determine a target channel based on the channel assessment result, where a bandwidth of the target channel is greater than 80 MHz, and the bandwidth of the target channel is not a bandwidth of the existing Wi-Fi channel

203

Send data to a receiving end through the target channel, or receive data from a transmitting end through the target channel

FIG. 2

FIG. 3

| Secondary channel 20 | Secondary channel 20 | Primary channel 20 | Secondary channel 40 |
|---|---|---|---|

20 MHz

80 MHz

FIG. 4

| Legacy short training field | Legacy long training field | Legacy signaling field | Repeated legacy signal field | Universal signal field | Extremely high throughput signal field | Extremely high throughput short training field | Extremely high throughput long training field | Data | Packet extension field |
|---|---|---|---|---|---|---|---|---|---|

| Physical layer version identifier | Bandwidth | Uplink or downlink identifier | Basic service set color | Transmission opportunity | ... | ... | Channel puncturing information | ... |
|---|---|---|---|---|---|---|---|---|

FIG. 5

EP 4 554 320 A1

32

TO
FIG. 6B

FIG. 6A

CONT. FROM
FIG. 6A

Segmentation
deparsing

...

Segmentation
deparsing

Spatial
mapping

IDFT

Frequency
shift

Analog signal
and radio
frequency

IDFT

Frequency
shift

Analog signal
and radio
frequency

FIG. 6B

FIG. 7a

FIG. 7b

FIG. 8

| Secondary channel 20-1 | Secondary channel 20 | Primary channel 20 | Secondary channel 40 | Secondary channel 80 | Secondary channel 20-2 |
|---|---|---|---|---|---|

FIG. 9

STA 1

80 M PPDU 1

100 M PPDU 3

STA 2

20 M PPDU 2

FIG. 10

LPF BW 120

| 149 | 153 | 157 | 161 | 165 |

L0: 5775 MHz

FIG. 11

LPF BW 160

| 149 | 153 | 157 | 161 | 165 | | | |

L0: 5815 MHz

FIG. 12

Channel
(Channel) 32

Interference
(Interference)

STA 1   Channel 32

200 M PPDU
1

160 M PPDU
2

160 M PPDU
3

Channel 68

Interference

FIG. 13

LPF BW 200

| 32 | 36 | 40 | 44 | 48 | 52 | 56 | 60 | 64 | 68 |

L0: 5250 MHz

FIG. 14

1500

Communication device

1501

Channel
assessment
module

1502

Channel
determining
module

1503

Transceiver
module

FIG. 15

1600

Communication device

1603
Processor

1601
Receiver

1602
Transmitter

1604
Memory

FIG. 16

| INTERNATIONAL SEARCH REPORT | International application No. |
|---|---|
| | **PCT/CN2023/103274** |

**A.    CLASSIFICATION OF SUBJECT MATTER**

H04W84/12(2009.01)i;   H04W72/04(2023.01)i

According to International Patent Classification (IPC) or to both national classification and IPC

**B.    FIELDS SEARCHED**

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, ENTXTC, VEN: WiFi, 带宽, 打孔, 合并, 聚合, 拼接, 组合, 利用率, 大于, 80M, bandwidth, puncturing, aggregation, multi, RU, CCA

**C.    DOCUMENTS CONSIDERED TO BE RELEVANT**

| Category* | Citation of document, with indication, where appropriate, of the relevant passages | Relevant to claim No. |
|---|---|---|
| X | CN 113133115 A (HUAWEI TECHNOLOGIES CO., LTD.) 16 July 2021 (2021-07-16) description, paragraphs 80-87, 155-162, 195-198, 204, and 232-239 | 1-7, 9-23 |
| Y | CN 113133115 A (HUAWEI TECHNOLOGIES CO., LTD.) 16 July 2021 (2021-07-16) description, paragraphs 80-87, 155-162, 195-198, 204, and 232-239 | 2-23 |
| Y | CN 113923082 A (HUAWEI TECHNOLOGIES CO., LTD.) 11 January 2022 (2022-01-11) description, paragraphs 109-122 | 2-23 |
| A | CN 113541859 A (HUAWEI TECHNOLOGIES CO., LTD.) 22 October 2021 (2021-10-22) entire document | 1-23 |
| A | CN 113133116 A (HUAWEI TECHNOLOGIES CO., LTD.) 16 July 2021 (2021-07-16) entire document | 1-23 |
| A | US 2022006594 A1 (SAMSUNG ELECTRONICS CO., LTD.) 06 January 2022 (2022-01-06) entire document | 1-23 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 August 2023** | **23 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | | International application No. |
| Information on patent family members | | PCT/CN2023/103274 |

| Patent document cited in search report | | | Publication date (day/month/year) | Patent family member(s) | | | Publication date (day/month/year) |
|---|---|---|---|---|---|---|---|
| CN | 113133115 | A | 16 July 2021 | WO | 2021139791 | A1 | 15 July 2021 |
| | | | | KR | 20220125303 | A | 14 September 2022 |
| | | | | EP | 4080965 | A1 | 26 October 2022 |
| | | | | US | 2022345275 | A1 | 27 October 2022 |
| | | | | IN | 202217040656 | A | 23 December 2022 |
| | | | | JP | 2023510814 | W | 15 March 2023 |
| CN | 113923082 | A | 11 January 2022 | WO | 2022007870 | A1 | 13 January 2022 |
| | | | | EP | 4167534 | A1 | 19 April 2023 |
| | | | | BR | 112023000445 | A2 | 28 March 2023 |
| CN | 113541859 | A | 22 October 2021 | WO | 2021208795 | A1 | 21 October 2021 |
| | | | | US | 2023039547 | A1 | 09 February 2023 |
| CN | 113133116 | A | 16 July 2021 | WO | 2021139765 | A1 | 15 July 2021 |
| | | | | KR | 20220126752 | A | 16 September 2022 |
| | | | | EP | 4080966 | A1 | 26 October 2022 |
| | | | | US | 2022353029 | A1 | 03 November 2022 |
| | | | | JP | 2023509788 | W | 09 March 2023 |
| | | | | CA | 3164366 | A1 | 15 July 2021 |
| | | | | AU | 2021206754 | A1 | 18 August 2022 |
| | | | | BR | 112022013699 | A2 | 06 September 2022 |
| | | | | IN | 202237042080 | A | 27 January 2023 |
| US | 2022006594 | A1 | 06 January 2022 | EP | 3934148 | A1 | 05 January 2022 |
| | | | | CN | 113890704 | A | 04 January 2022 |
| | | | | KR | 20220003443 | A | 10 January 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210910681X